(19) Europäisches Patentamt
European Patent Office
Office européen des brevets

(11) **EP 3 548 447 B1**

(12) **EUROPEAN PATENT SPECIFICATION**

(45) Date of publication and mention of the grant of the patent:
**14.04.2021 Bulletin 2021/15**

(21) Application number: **16806075.4**

(22) Date of filing: **05.12.2016**

(51) Int Cl.:
*C04B 28/02* (2006.01)         *C04B 14/02* (2006.01)
*B82Y 30/00* (2011.01)         *C01B 32/174* (2017.01)

(86) International application number:
**PCT/EP2016/079742**

(87) International publication number:
**WO 2018/103814 (14.06.2018 Gazette 2018/24)**

(54) **CONSTRUCTION MATERIAL COMPOSITION COMPRISING CARBON NANOTUBES AND METHOD FOR THE PREPARATION THEREOF**

KONSTRUKTIONSMATERIALZUSAMMENSETZUNG MIT KOHLENSTOFFNANORÖHRCHEN UND VERFAHREN ZUR HERSTELLUNG DAVON

COMPOSITION DE MATÉRIAU DE CONSTRUCTION COMPRENANT DES NANOTUBES DE CARBONE ET PROCÉDÉ DE PRÉPARATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.10.2019 Bulletin 2019/41**

(60) Divisional application:
**21155983.6**

(73) Proprietor: **Art Carbon International AG**
**6300 Zug (CH)**

(72) Inventors:
• **HIRSCH, Nikita**
  **70327 Stuttgart (DE)**
• **ZHDANOK, Siarhei**
  **Minsk**
  **220141 (BY)**
• **KOEHLER, Andreas**
  **83700 Reitrain (DE)**
• **SETHI, Manvinder**
  **6343 Rotkreuz (CH)**

(74) Representative: **Hoffmann Eitle**
**Patent- und Rechtsanwälte PartmbB**
**Arabellastraße 30**
**81925 München (DE)**

(56) References cited:
**EP-A1- 2 514 728       WO-A1-2016/148678**
**FR-A1- 2 969 143       FR-A1- 2 998 573**
**US-A1- 2009 229 494**

• **"Research on the influence of the carbon -nanotubes injection method on cement composite properties", ZKG INTERNATIONAL,, [Online] vol. 68, no. 3, 1 January 2015 (2015-01-01), pages 46-48, XP001596241, ISSN: 0949-0205 Retrieved from the Internet: URL:www.zkg.de>**
• **BAOGUO HAN ET AL: "Electrostatic self-assembled carbon nanotube/nano carbon black composite fillers reinforced cement-based materials with multifunctionality", COMPOSITES PART A: APPLIED SCIENCE AND MANUFACTURING, vol. 79, 1 December 2015 (2015-12-01), pages 103-115, XP055408874, AMSTERDAM, NL ISSN: 1359-835X, DOI: 10.1016/j.compositesa.2015.09.016**

**Description**

TECHNICAL FIELD

The present invention relates to a construction material composition and a method for preparing said composition.

LITERATURE DESCRIBING CARBON NANOTUBES:

S. Iijima, Nature 1991, 354, 56.

L. X. Zheng, M. J. O'Connell, S. K. Doorn, X. Z. Liao, Y. H. Zhao, E. A. Akhadov, M. A. Hoffbauer, B. J. Roop, Q. X. Jia, R. C. Dye, D. E. Peterson, S. M. Huang, J. Liu, Y. T. Zhu, Nat. Mater. 2004, 3, 673.

P. G. Collins, P. Avouris, Scientific American 2000, 62. S. Berber, Y.-K. Kwon, D. Tomanek, Phys. Rev. Lett. 2000, 84, 4613.

B. Q. Wei, R. Vajtai, P. M. Ajayan, Appl. Phys. Lett. 2001, 79, 1172.

B. Kim, A. Fuhrer, J. Phys.: Condensed Matter 2004, 16, 553. Z. K. Tang, L. Zhang, N. Wang, X. X. Zhang, G. H. Wen, G. D. Li, J. N. Wang, C. T. Chan, P. Sheng, Science 2001, 292, 2462.

I. W. Chiang, B. E. Brinson, R. E. Smalley, J. L. Margrave, R. H. Hauge, J. Phys. Chem. B 2001, 105, 1157.

S. Bandow, A. M. Rao, K. A. Williams, A. Thess, R. E. Smalley, P. C. Eklund, J. Phys. Chem. B 1997, 101, 8839.

G. S. Duesberg, J. Muster, V. Krstic, M. Burghard, S. Roth, Appl. Phys. A 1998, 67, 117.

M. Holzinger, A. Hirsch, P. Bernier, G. S. Duesberg, M. Burghard, Appl. Phys. A 2000, 70, 599.

S. Niyogi, H. Hu, M. A. Hamon, P. Bhowmik, B. Zhao, S. M. Rozenzhak, J. Chen, M. E. Itkis, M. S. Meier, R. C. Haddon, J. Am. Chem. Soc. 2001, 123, 733.

M. S. Arnold, A. A. Green, J. F. Hulvat, S. I. Stupp, M. C. Hersam, Nat. Nanotechnol. 2006, 1, 60.

C. A. Dyke, J. M. Tour, Nano Lett. 2003, 3, 1215.

V. C. Moore, M. S. Strano, E. H. Haroz, R. H. Hauge, R. E. Smalley, J. Schmidt, Y. Talmon, Nano Lett. 2003, 3, 1379.

A.Ishibashi, N. Nakashima, Chem. Eur. J. 2006, 12, 7595.

W. Wenseleers, I. I. Vlasov, E. Goovaerts, E. D. Obraztsova, A. S. Lobach, A. Bouwen, Adv. Funct. Mater. 2004, 14, 1105.

H. Dodziuk, A. Ejchart, W. Anczewski, H. Ueda, E. Krinichnaya, G. Dolgonos, W. A.Kutner, Chem. Commun. 2003, 9, 986.

S. Iijima, T. Ichihashi, Nature 1993, 363, 603.

H. Zhu, C. Xu, B. Wei, D. Wu, Carbon 2002, 40, 2023.

J. Tersoff, R. S. Ruoff, Phys. Rev. Lett. 1994, 73, 676.

A. Thess, R. Lee, P. Nikolaev, H. Dai, P. Petit, J. Robert, C. Xu, Y. H. Lee, S. G. Kim, et al., Science 1996, 273, 483.

M. J. O'Connell, P. Boul, L. M. Ericson, C. Huffman, Y. Wang, E. Haroz, C. Kuper, J. Tour, K. D. Ausman, R. E. Smalley, Chem. Phys. Lett. 2001, 342, 265.

A. Jung, University of Erlangen-Nürnberg (Erlangen), 2007.

H. Allouche, M. Monthioux, R. L. Jacobsen, Carbon 2003, 41, 2897.

H. Allouche, M. Monthioux, Carbon 2005, 43, 1265.

T. W. Odom, J.-L. Huang, P. Kim, C. M. Lieber, J. Phys. Chem. B 2000, 104, 2794.

S. Belluci, Phys. Stat. Sol. C 2005, 2, 34.

H. G. Chae, S. Kumar, J. Appl. Polym. Sci. 2005, 100, 791.

B. G. Demczyk, Y. M. Wang, J. Cumings, M. Hetman, W. Han, A. Zettl, R. O. Ritchie, Mater. Sci. Eng., A 2002, 334, 173. M. Meo, R. M., Compos. Sci. Technol. 2006, 66, 1597.

S. B. Meo, A. R., Crit. Rev. Solid State Mater. Sci. 2001, 26, 145.

M.-F. Yu, O. Lourie, M. J. Dyer, K. Moloni, T. F. Kelly, R. S. Ruoff, Science 2000, 287, 637.

J.-P. Salvetat-Delmotte, A. Rubio, Carbon 2002, 40, 1729.

S. Niyogi, M. A. Hamon, H. Hu, B. Zhao, P. Bhowmik, R. Sen, M. E. Itkis, R. C. Haddon, Acc. Chem. Res. 2002, 35, 1105.

S. Banerjee, T. Hemraj-Benny, S. S. Wong, Adv. Mater. 2005, 17, 17.

Z. Chen, W. Thiel, A. Hirsch, Chem. Phys. Chem. 2003, 4, 93. Tohji et al, J. Phys. Chem. B, 101 (1997) pp. 1974-1978.

Shi et al, Solid State Communications, 112 (1999) pp. 35-37. Mizoguti et al; Chemical Physics Letters, 321 (2000) pp. 297-301.

Zimmerman et al, Chem. Mater, 12 (2000) pp. 1361-1366. Dujardin et al, 10 (1998) pp. 1472-1475.

Rinzler et al, Appl. Phys. 67 (1998) pp. 29-37.

Dillion et al, Adv. Mater, 11 (1999) pp. 1354-1358.

Bandow et al, J. Phys. Chem. 101 (1997) pp. 8839-8842.

Shelimov et al, Chemical Physics Letter, 282 (1998) pp. 429-434.

Harutyunyan et al, Mat. Res. Soc. Symp. Proc., 706 (2002) pp. Z2.8.1-Z2.8.5.

Chen, et al., 13 (9) J. Mater. Res. (1998), pp. 2423-2431. Chen, et al, 282 Science (1998), pp. 95-98.

Holzinger, et al., 40 (21) Angew. Chem. Int. Ed. (2001), pp. 4002-4005.

Peng, et al., Chem. Commun. (2003), pp. 362-363.

Kini, et al., Rice Quantum Inst. Sixteenth Annual Summer Research Colloquium (Aug. 9, 2002), Abtr. p. 25.

Bahr, et al., 13 Chem. Mater. (2001), pp. 3823-3824.

Kooi, et al., , 41 (8) Angew. Chem. Int. Ed. (2002), pp. 1353-1355. Tagmatarchis, et al., Chem. Commun. (2002), pp. 2010-2011.

LITERATURE CONCERNING FLY ASH

"Coal Ash: Characteristics, Management and Environmental Issues", 1019022 September 2009, Electric Power Research Institute

Xiuping Feng, Boyd Clark 2011 World of coal Ash (WOCA) Conference - May 9-12,2011 in Denver, CO, USA

User Guidelines for Waste and Byproduct Materials in Pavement Construction, Publication Number: FHWA-RD-97-148, Federal Highway Administration Research and Technology

Ghassan K. Al-Chaar, Mouin Alkadi and Panagiotis G. Asteris, The Open Construction and Building Technology Journal, 2013, 7, 33-42

Wolfram Schmidt, Dirk Wend, Hans-Carsten Kühne, Birgit Meng, The influence of superplasticiser modifications on early hydration processes, Concrete plant international CPI,2012

PRIOR ART

FR 2998573 A1 relates to hardenable inorganic systems such as cements, plasters, ceramics or liquid silicates, usable for example in the building trade and construction industry. The hardenable inorganic system such as cement is usually mixed with sand. Carbonaceous nanofillers, such as carbon nanotubes, are added for reinforcing mechanical properties and improving such systems. The content of carbonaceous nanofillers is from 1 ppm to 200 ppm, preferably from 5 ppm to 100 ppm and more preferably from 5 ppm to 50 ppm by mass, in terms of the hardenable inorganic system. In a method for producing a master mixture, at least one superplasticizer and carbonaceous nanofillers are comprised at a mass ratio of between 0.1% and 25%, preferably between 0.2% and 20%, in relation to the total weight of the master mixture. WO 2016/148678 A1 mentions a cement composition comprising cementitious material, an aqueous base fluid, a nano-reinforcement particle suspension comprising a surfactant, and a specific pozzolanic material. The nano-reinforcement particles can be carbon nanotubes, multi-wall carbon nanotubes, and combinations thereof. The pozzolanic material can be present in an amount of about 0.01% to about 20.0% by weight of cement. The pozzolanic material can be at least one selected from nano-silica, nano-clay, nano-fly ash, micro-silica, micro-clay, micro-fly ash, and combinations thereof.

From the prior art it is known, that the properties of concrete can be improved by combining cements with pozzolanic additives such as inter alia fly ash:

The documents WO 2014/137396 and DE 112013005713 T5, as well as DE 112013004933 T5, US 5,513,755, US 9,254,490, US2012/0280069 and US2014/0245931 describe an addition of a specially treated pozzolanic fly ash to cement.

JP 2002160960 A2 describes a hydraulically setting aluminous cement composition with pozzolanic additives such as fly ash. Document JP 2003055019 A2 describes the compositions of cement and a fine pozzolanic powder.

US 2015/0183689 describes a composition of calcium containing materials, as for example - cement, with aluminum-based materials, lithium-based accelerator and pozzolanic additives containing solvable sulfur salts.

The patent DE 60302138 T2 describes the use of coal fly ash with a high carbon content as pozzolanic additives for the production of a concrete mixture.

US 2007/0289503 describes an addition of fly ash with a reduced sulfur content to a cement mixture.

US Patent 8,440,015 describes a concrete composition based on Portland cement together with fly ash having a reduced content of passivated coal as the replacement for Portland cement.

US 3,765,920 describes the use of pozzolanic additives with alkaline compositions and carbohydrates.

JP 2006327868 A2 describes concrete compositions based on aluminate cement, blast furnace slag and an additional shrinkage reducing additive based on fly ash.

Subject of JP 2006225221 A2 is a mortar composition with calcium aluminate cement, pozzolanic additive and non-ferrous slag, optionally mixed with a polymer dispersion or fibers. US 2008/0017077 A1 describe a cellular lightweight concrete composition with pozzolanic slag.

An acid-resistant mortar from aluminate cement, slag sand, polymer dispersion and shrinkage reducing additive is described in JP 2006044958 A2.

The subject of US Patent Application 2009/0158969 is a light weight cement composition with fly ash (C- or F-classes) and air pore former as additives.

DE 102014013804 A1 describes a construction composition comprising a binder made from pozzolanic additive with synthetic silicate and the method to prepare such composition including a step of dissolving the binder using an organic acid.

KR 20040089995 A provides a mortar composition consisting of Portland cement, blast furnace slag, an inorganic binder, acrylate or styrene-butadiene polymer.

Subject of EP 1614670 A2 is cement mortar system consisting of Portland cement, clinker, calcium aluminate cement and additives from the group of pozzolans or latent hydraulic substances.

JP 2007001802 A2 is directed to a composition of Portland cement, pozzolans, latent hydraulic binder such as slag, with optionally added polymer dispersion, water-soluble polymer or expanded clay.

United States Patent Application 2010/0071597 describes a cement composition, having high compressive strength and faster drying rate, based on fly ash admixture with alkali citrine salts and surfactants.

Despite the foregoing, a great demand still remains for new cement compositions using an exceptionally high content of pozzolanic materials such as fly ash and a reduced amount of calcium in order to simultaneously increase the flow properties of the cement compositions and their final strength as well as to reduce drying and consolidating time of the hydrated cement compositions.

From the prior art it is known that a combination of cements with carbon nanotubes in powder form can improve some properties of concrete:

United States Patent Application 2009/0229494 proposes a composite cement material comprising the cement material and carbon nanotubes, wherein the content of carbon nanotubes is from about 0.02% to about 0.10%, based on the weight of cementitious material.

The subject of DE 102013114824 A1 is a cement composition comprising a mineral component and an aqueous solution of a surfactant component in Portland cement in a ratio of cement component to complex admixture from about 10000 to 1 up to 1:10.

CN 105060790 A describes a composite mortar with carbon nanotube and nano-carbon black.

Subject of CN 104591623A is a composition for the production of concrete for the marine environment which includes carbon nanotubes.

CN 104030634A describes a cement composition with carbon nanotube powder.

The subject of CN102603235A is a water-resistant concrete composition containing carbon nanotube powder.

KR101180060B1 describes a reinforcement composition for concrete structures containing carbon nanotube powder.

The above-mentioned solutions are usually based on the use of dry carbon nanotube powder compositions with very high concentrations of nanotubes. In some compositions, one speaks about the addition of 100 kg carbon nanotube powder to 1000 kg of Portland cement. This makes such a composition not economically viable. And above all, such an amount of carbon nanotubes has a strong tendency to coagulate. Coagulation of carbon nanotubes leads further on to an elimination of their catalytic properties and thus makes the use of nanotubes inefficient.

It is also known to increase the strength of the concrete compositions by means of concrete reinforcement. As reinforcing components steel grating, steel wires, steel bars, and various artificial and natural fiber materials are often used. One of the biggest disadvantages of such reinforcement is that the reinforcement is organized at the macro level. In this case, the cement stone structure, which determines the strength of the concrete compositions, will remain unchanged.

One of the applications that are widely discussed nowadays is to modify the cement stone structure in concrete by the incorporation of highly active microscopic additives such as nano-materials, micro quartz, microscopic silicic acid, and microscopic ground aluminum ores.

The feed of nanomaterials in the concrete has been shown as a very difficult matter due to the fact that ultra-fine particles tend to aggregate, thus increasing the size of the aggregated structures.

Concrete comprises different hydraulically hardening compositions, in the simplest case, consisting of water, cement, coarse gravel or crushed rocks, and sand.

Concrete, as well as mortar, screed or plaster, is a porous building material which can be characterized by its pore structure. Gel pores, capillarity and air pores create pore structure of concrete. Water can be taken up by capillary suction over the pore structure of the concrete construction. For concrete, as well as mortar, screed or plaster, the water absorption and pollutants dissolved therein, is one of the main causes of damages in reinforced concrete, as well as of corrosion of the reinforcement materials in concrete constructions.

At the same time, the pore structure in construction materials, especially of the air pores, is responsible for the resistance of construction materials against warming-cooling cycles.

According to DIN EN 450, fly ash is defined as follows: "A fine-grained dust mainly composed of spherical glassy particles, produced during the combustion of finely ground coal, that has pozzolanic properties and consists essentially of $SiO_2$ and $Al_2O_3$. Fly ash is obtained by electrostatic or mechanical precipitation of dust-like particles from exhaust gases of combustion plants which are fired by milled anthracite or milled coal."

Fly ash acts in construction materials, among others in concrete, in different ways. Fly ash has a rheological effect, increases the volume and mass, and also contributes by pozzolanic reaction to the strength of the concrete.

The use of fly ash in certain proportions as replacement of cement increases the fluidizing properties of the construction materials, among others concretes. This rheological effect is attributed to innumerable spherical fly ash particles. These spherical particles have a smooth surface that reduces the friction of the sealing agent materials, such as cement and sand twill, as well as gravel. Higher fluidizing properties and increased fluidity of the concrete allows reducing the water content in the concrete mixture.

The addition of fly ash to construction materials, among others to concrete, increases the density of the grain mixture by the inclusion of fly ash into the finest pores of the construction materials such as concrete, mortar, screed or plaster. The result is the reduction of the amount of water-filled cavities.

The filler materials, in particular the fly ash components, also form points of stabilization for the initially still unstable calcium silicate hydrate crystals that grow into the cavities.

A pozzolan is a mineral substance which even contains though almost no lime, but can react at room temperature with lime and water to allow the formation of calcium silicates and calcium aluminate hydrates. Pozzolans contain amorphous silicon dioxide and amorphous alumina substances. These components of the fly ash can enter into a reaction with lime. This reaction in comparison to the hydration of cement is much slower. The fly ash as a pozzolanic material in combination with cement and water reacts with the calcium hydroxide which is formed during the hydration of cement and in many respects represents the weakest component of the cement stone.

Calcium silicate phases provide the same effect as calcium hydroxide in that they contribute to enhancing strength, and at the same time lead to a reduction of the proportion of capillary pores in the hardened cement. This reduction of capillary content and reduction of the pore sizes increases the resistance of the construction materials against damage.

There are two main groups of carbon nanotubes: Single-wall carbon nanotubes (single-walled carbon nanotubes - SWNT), made up from a single, rolled-up and linked to the tube graphite layer - graphene, and Multi-walled carbon nanotubes (multi-walled carbon nanotubes - MWNTs), composed of several, up to 70 nested carbon nanotubes having different diameters. There are also double-wall carbon nanotubes (Double-Walled Carbon Nanotubes - DWNTs), which with only two layers take a special position between the above mentioned two other groups.

Single-walled carbon nanotubes can be imagined as a perfect graphene sheet (a single graphite basal plane), which is cylindrically rolled up and seamlessly combined to the outside atoms of the hexagonal rings.

Theoretically, there are no restrictions on the way how to roll up such a graphene layer. Any SWNTs with diameters less than 0.4 nm and greater than 2.5 nm have not been found as yet. The average diameter experimentally found is about 1.2 nm. This also corresponds to the stability computationally determined, because CNTs with very small diameters, due to the curvature, have a high tension of the bonds and hence a poor stability.

In contrast, flat nanotubes with diameters > 2.5 nm due to the van der Waals interaction with the opposite tube wall strongly deformed and lose their typical tubular structure.

The length of SWNTs can reach several micrometers. The lengths are depending only from the selected manufacturing method. Furthermore, as a result of van der Waals interactions of 0.5 eV per nanometer of SWNTs, CNT-CNT-contact surfaces arise in the form of agglomerates or bundles.

There are several possibilities, regarding the angle at which a graphene sheet can be rolled up. For the representation of this third factor, next to the diameter and the length, the so-called roll-up or curl vector $(\vec{C\_h})$ is used.

The unit cell of the graphene sheet will be represented by two lattice vectors $\vec{a_1}$ and $\vec{a_2}$ and contains two carbon atoms. This gives, with a = 2,46 Å for graphene:

$$\vec{a_1} = \left( \frac{\sqrt{3}a}{2}, +\frac{a}{2} \right) \quad \text{und} \quad \vec{a_2} = \left( \frac{\sqrt{3}a}{2}, -\frac{a}{2} \right)$$

The graphene layer is rolled up so that the curl vector $\overrightarrow{C_h}$ and the helicity angle $\Theta$, which is defined as the angle between $\overrightarrow{a_1}$ und $\overrightarrow{C_h}$, that:

$$\overrightarrow{C_h} = n\overrightarrow{a_1} + m\overrightarrow{a_2} \quad \text{und} \quad \cos\Theta = \frac{2n+m}{2\sqrt{n^2+m^2+nm}}$$

Therefore $\overrightarrow{C_h}$ is the periphery of the nanotube. The diameter D of the respective nanotube can be represented by means of the curl vector $\overrightarrow{C_h}$ through the following equation:

$$D = \frac{|\overrightarrow{C_h}|}{\pi} = \frac{a_{C=C}\sqrt{3(n^2+m^2+nm)}}{\pi}$$

with $1{,}41\ \text{Å}_{(Graphit)} \leq a_{C=C} \leq 1{,}44\ \text{Å}_{(Fulleren)}$

There are two boundary conditions for the curl vector $\overrightarrow{C_h}$. If $\overrightarrow{C_h}$ is perpendicular to one of the three binding directions ($\Theta = 0°$), SWNTs are referred as "zig-zag" tubes or (n, 0)-CNTs. If $\overrightarrow{C_h}$ parallel to one of three binding directions ($\Theta = 30°$), then so called "armchair" or (n, n)-tubes will arise. For the remaining chiral (n, m)-combinations, due to six-fold symmetry of the graphene planes, helicity angle will be negative, - $\Theta$. Combination from (m, n) with m > n corresponds with (n, m)-counterpart in all but only with mirror-image helicity.

Depending on the art, how the graphene plane is rolled to SWNT, not only the diameter and chirality of a tube is determined, but also their electronic properties will be defined.

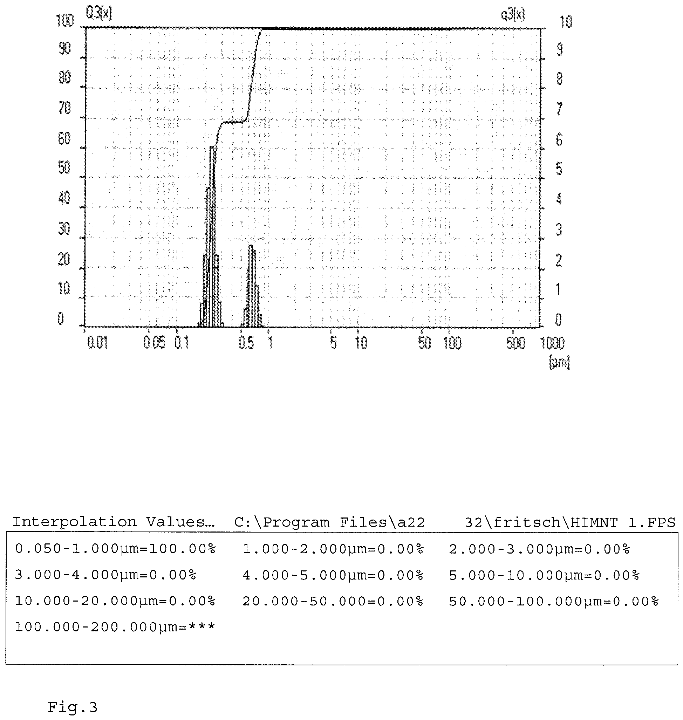

Multi-walled carbon nanotubes can be imagined, based on a SWNT, as a cladding of one CNT with another rolled-up graphene layers, with successive increased diameters of one sheath to the next one (Figure 3). The distance between the individual tube walls is 0.34 nm. This corresponds roughly to the distance between the graphene sheets in graphite. Due to the numerous layers within a MWNT, multi-walled carbon nanotubes may be substantially more rigid than a single SWNT.

The mechanical and electrical properties of CNTs are highly dependent on their structure, that means, the way how the graphene plane is rolled up and how many layers have a carbon nanotube.

The electrical properties of carbon nanotubes can be illustrated based on the simple model, so-called planar graphene level. In this model, the curvature of the tube is considered as a distortion of the planarity that leads to certain limitations. The unit cell of the graphene space grid is enclosed by a hexagon and contains two carbon atoms. Graphene is a semiconductor with zero band gap, thereby the highest valence band is formed from occupied n-states, the lowest conduction band is formed from unoccupied $\Pi$ *- states. The n- and $\Pi$ * bands are degenerated at certain points in reciprocal space, the so-called K-points, , i.e. they touch each other at these points. Therefore, conductivity can occur only at these points. The K-points lie on the corners of the reciprocal unit cell, the so-called Brillouin zone.

Because of the rolling up graphene plane forms a carbon nanotube it comes to the periodic boundary conditions, and due to this to quantizing the allowed wave functions in the direction parallel to $\overrightarrow{C_h}$. It is considered that a multiple amount of the wavelength of the wave function passed in the periphery of the CNT and due to this it has to be that $\overrightarrow{C_h}$ is equal to multiple wavelength of the wave function in the periphery of the CNT and have to fit to $\overrightarrow{C_h}$.

$$(n - m) = 3q$$

with $q \in N_0$

From this equation it follows that "zig-zag" '(n, 0) and chiral (n, m, with m ≠ 0) in case that (n - m) / 3 is an integer, are metallic SWNTs. In other cases, they are semiconducting. "Armchair" (n, n) SWNTs are always metallic. This means that one third of SWNTs are metallic and two thirds are semiconducting.

Areas of high density of states (singularities) occur always at the places where the bands in the band structure are remaining flat. These areas are usually called VAN HOVE singularities (VHS). Whether a SWNT is metallic or semiconducting, can be obtained, based on such art of presentation, through whether the state density exist at Fermi level (metallic), or not (semiconducting). Because the distances between the VHS of SWNTs are located in the energy of visible light, a mixture of different carbon nanotubes by light absorption appears to have a black color.

Mechanical properties of carbon nanotubes gives then due to the very strong $sp^2$ C-C bonds and their one-dimensional expansion the position of strongest known material, based on such parameters as the tensile strength and modulus of elasticity (E-modulus). With their extremely low density, for solid materials, from 1.33 up to 1.40 g/cm$^3$ makes their specific strength of about 48,000 kN m kg$^{-1}$ represents a world record.

Tensile tests of CNTs in case of an open tube ends lead to a telescopic withdrawal of the inner tubes from the outer tubes. Another peculiarity of CNTs is their very high flexibility which decreases in case of the MWNTs with increasing thickness. SWNTs can for example be twisted, bent or squeezed, without that these deformations causing structural damage to the tube. The reason for this is the ability of sp$^2$ network of carbon atoms to change their level of hybridization during deformation. Here, the smaller the angle of deformation is, the stronger will be the sp$^3$ character of the bonds.

The chemical reactivity of carbon nanotubes can be in principle compared with the reactivity of the other sp$^2$ carbon allotropes - graphite and fullerene. There are special features of CNTs, due to the unique structure, that are not found in other polyaromatic carbon compounds. Compared with graphite a perfect, infinitely long SWNT has no chemically reactive free bonds. However, the curvature of the bonds between the sp$^2$ carbon atoms in CNTs pyramidalization and misalignment of the n-orbitals, leads to local bond stresses.

Therefore, generally for a CNT a higher chemical reactivity compared to a plane graphene is expected. Due to the curvature of the end caps in two spatial directions,the reactivity of CNTs should be similar to that of fullerenes.

SUMMARY OF THE INVENTION

Problems to be Solved by the Invention

The purpose of the present invention is to improve the physical and mechanical properties of construction material compositions. The present invention has been made in consideration of the above-described circumstances and the present invention aims to provide (i) a construction material composition which has a higher compression strength, shorter drying and consolidating times compared to conventional compositions, and (ii) a method for preparing said composition by blending at least one binder, at least one filler, a stabilized aqueous carbon nanotube dispersion and optionally water.

Means for Solving the Problem

A first aspect of the present invention relates to a construction material composition, comprising at least one binder, at least one filler, carbon nanotubes, and optional further ingredients,
wherein the proportion of the carbon nanotubes is further specified, namely, according to the broadest aspect of the present invention, the proportion, i.e. content, of the carbon nanotubes is 0.1 ppm to 150 ppm by mass, preferably 0.2 to 100 ppm by mass, more preferably 0.3 to 50 ppm by mass, and most preferably 0.1 to 0.5 ppm, in terms of the mass of the dry construction material composition. As recited in claim 1, the at least one binder is cement and fly ash, with the proportion of the fly ash being 30 to 85% by mass, in terms of the mass of the cement.

Preferred embodiments of the construction material composition are described in the dependent claims.

A method (A) for the preparation of a stabilized aqueous carbon nanotube dispersion, comprises the steps of

(1) Providing and preparing carbon nanotubes;
(2) Adding the carbon nanotubes to an, optionally alkaline, aqueous medium and dispersing to obtain an aqueous carbon nanotube dispersion;
(3) Treatment of the aqueous carbon nanotube dispersion by exposure to a pulsed electrostatic field; and
(4) Addition of a superplasticizer to the aqueous carbon nanotube dispersion after step (3).

A method (B) for the preparation of a stabilized aqueous carbon nanotube dispersion, comprising the steps of

(i) Providing or preparing carbon nanotubes;
(ii) Blending the carbon nanotubes with superplasticizer to obtain a, preferably dry, mixture;
(iii)Adding the mixture to an aqueous dispersion medium and dispersing to obtain an aqueous superplasticizer-containing carbon nanotube dispersion; and
(iv) Treatment of the aqueous superplasticizer-containing carbon nanotube dispersion by exposure to a pulsed electrostatic field.

In a non-claimed aspect, the present disclosure is further directed to a stabilized aqueous carbon nanotube dispersion obtainable by the above-described preparation method. Moreover, the present invention relates to a method for preparing a construction material composition according to the first aspect of the present invention comprising blending a stabilized aqueous carbon nanotube dispersion obtainable by the method (A) or a stabilized aqueous carbon nanotube dispersion obtainable by the method (B) with the at least one binder, the at least one filler, the optional further ingredients, and optionally water. This method for preparing the construction material composition according to the present invention is the subject of claim 12.

Effects of the Invention

As a result of extensive studies for solving the above problem, we have surprisingly found how the task of developing a high-strength construction material compositions with significantly better flow properties and shorter drying times as well as consolidating times can be accomplished.

BRIEF DESCRIPTION OF THE DRAWINGS

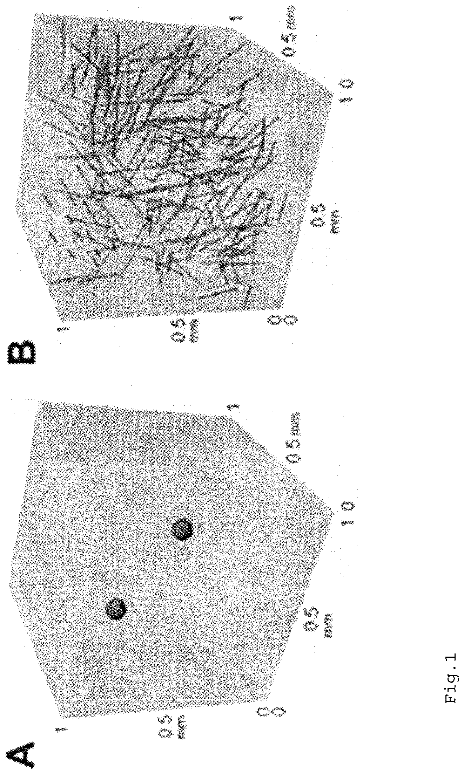

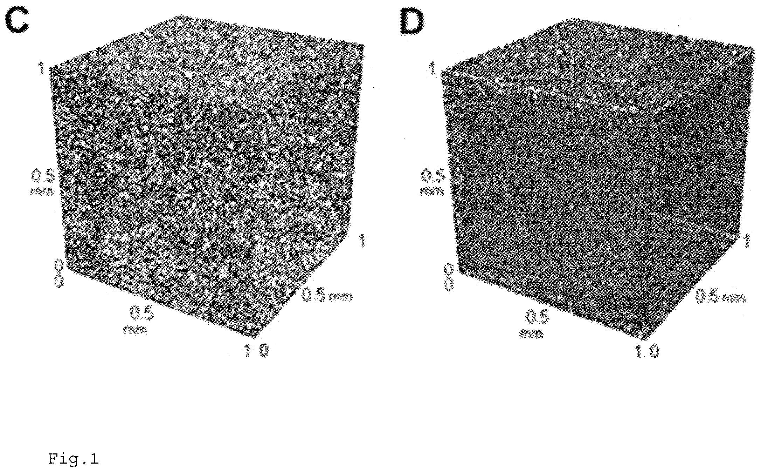

Fig. 1 displays the distribution of different size nanostructured carbon nanotubes (Concentration 0.1% by volume in 1 $mm^3$). Figure D shows the impact of intensive dispersion of much smaller particles. Figure D has over a million more times the surface area than Figure A. A is a commercial CNT product. D contains CNT treated according to the present disclosure, i.e. CNT's in stabilized aqueous CNT dispersions according to the present disclosure.

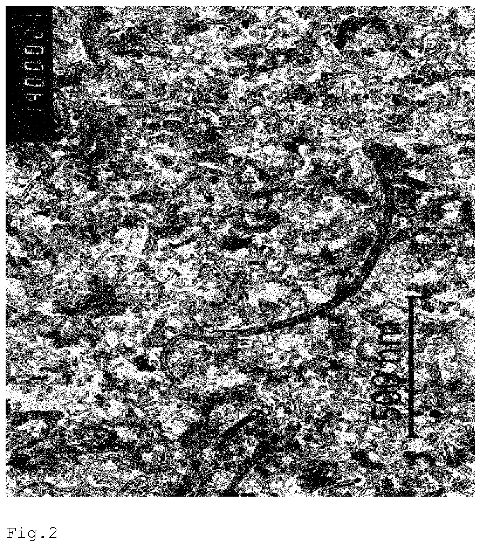

Fig. 2 is an image showing the carbon nanotube size distribution of CNT after dispersion in a hydrodynamic cavitation facility.

Fig. 3 is a graph showing the carbon nanotube size distribution of CNT after dispersion in a hydrodynamic cavitation facility (measurements made with Analysette-22 NanoTec instrument).

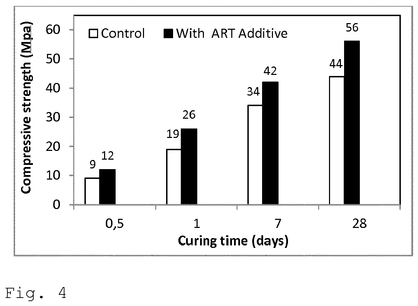

Fig. 4 is a graph illustrating the gain in compressions strength of a high-strength concrete not containing carbon nanotubes (white bars) in comparison with a high-strength concrete to which a dispersion of multi-walled carbon nanotubes was added (black bars) over a curing time of 28 days. The high-strength concrete with additive of CNT dispersion shows an increasing of the compression strength after 28 days of + 29%.

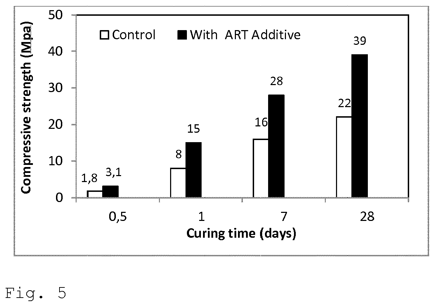

Fig. 5 is a graph illustrating the gain in compressions strength of a normal concrete not containing carbon nanotubes (white bars) in comparison with a normal concrete to which a dispersion of multi-walled carbon nanotubes was added (black bars) over a curing time of 28 days. The concrete with additive of CNT dispersion shows an increasing of the compression strength after 28 days of + 79%.

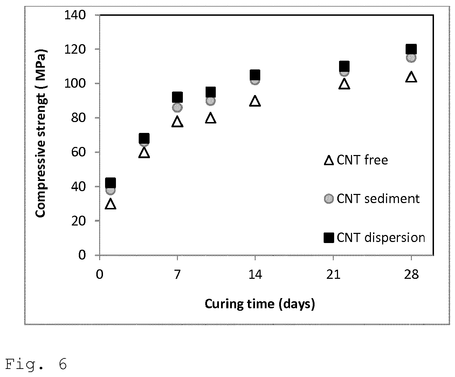

Fig. 6 is a graph illustrating the impact of carbon nanotubes and their pretreatment on the gain in compressions strength of concrete over a curing time period of 28 days. The compression strength of concrete not containing carbon nanotubes (white triangles), concrete to which a sediment of multi-walled carbon nanotubes was added (gray circles) and concrete to which a dispersion of multi-walled carbon nanotubes was added (black squares) were compared over a curing time period of 28 days. The carbon nanotubes proportion of the material to which the dispersion was added is 5.85 g per 1 ton of concrete (recalculated from the water based dispersion) or 0.00025% by the weight of concrete.

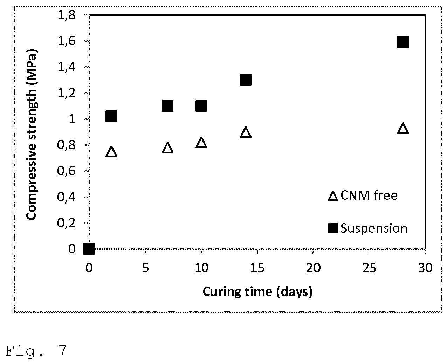

Fig. 7 is a graph illustrating the gain in compressions strength of foam concrete not containing carbon nanotubes (white triangles) in comparison with foam concrete concrete to which a dispersion of multi-walled carbon nanotubes was added (black squares) over a curing time of 28 days. The carbon nanotubes proportion of the material to which the dispersion was added is 5.85 g per 1 ton of concrete (recalculated from the water based dispersion) or 0.00025% by the weight of concrete.

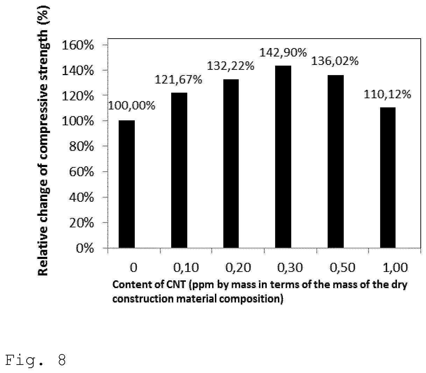

Fig. 8 is a graph illustrating the relative change in compression strength of a brick composition in dependence of the carbon nanotube proportion. The component composition is given in mass% relative to the dry mass of construction material. Brick composition (mass%): Silica (sand) 50-60 %; Alumina (clay) 20-30%; Lime 2-5%; Iron oxide < 7 %; Magnesia < 1%; Water 10-25%.

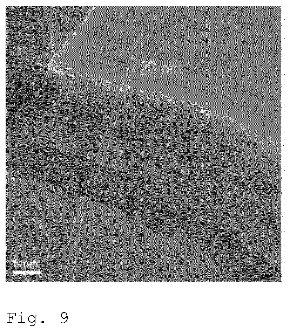

Fig. 9 is a TEM image of multi-walled carbon nanotubes treated according to the method of the present disclosure after dispersion in a hydrodynamic cavitation facility.

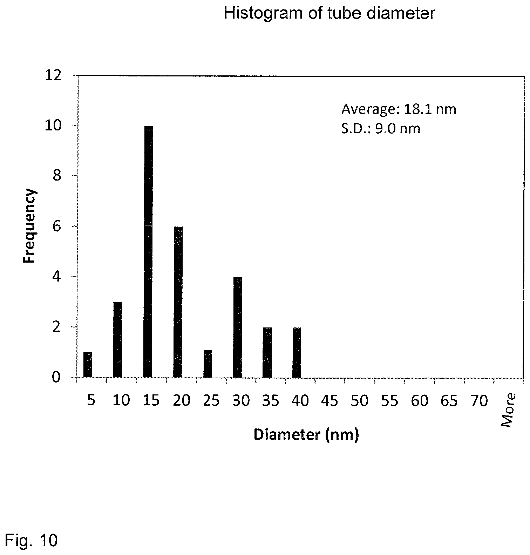

Fig. 10 is a histogram of the diameter distribution of our multi-walled carbon nanotubes treated according to the method of the present disclosure after dispersion in a hydrodynamic cavitation facility.

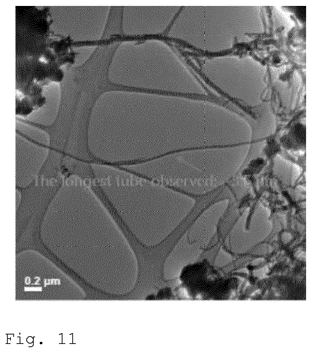

Fig. 11 is a TEM image of multi-walled carbon nanotubes treated according to the method of the present disclosure with a measured length of the displayed carbon-nanotubes of 3.5 $\mu$m.

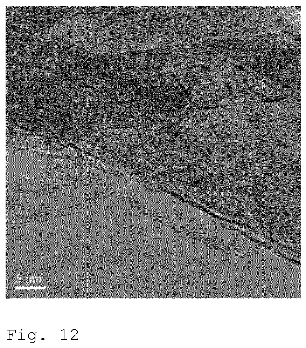

Fig. 12 is a TEM image of the cross section of the multi-walled carbon nanotubes treated according to the method of the present disclosure in a hydrodynamic cavitation facility.

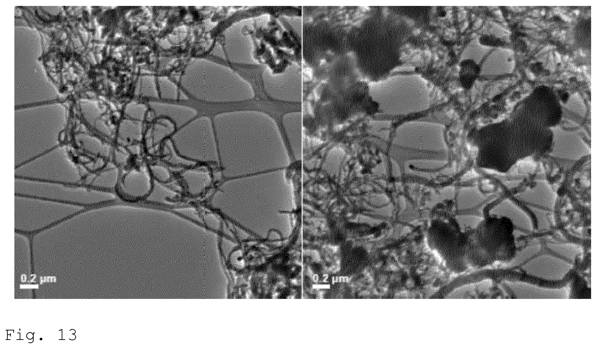

Fig. 13 is a TEM image of the multi-walled carbon nanotubes treated according to the method of the present disclosure in a hydrodynamic cavitation facility.

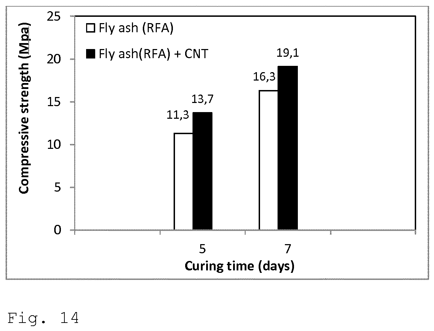

Fig. 14 is a graph illustrating the compressive strength after 5 and 7 days curing time of a construction material containing fly ash and concrete without carbon nanotubes (white bars) in comparison with said construction material to which a dispersion of multi-walled carbon nanotubes was added (black bars).

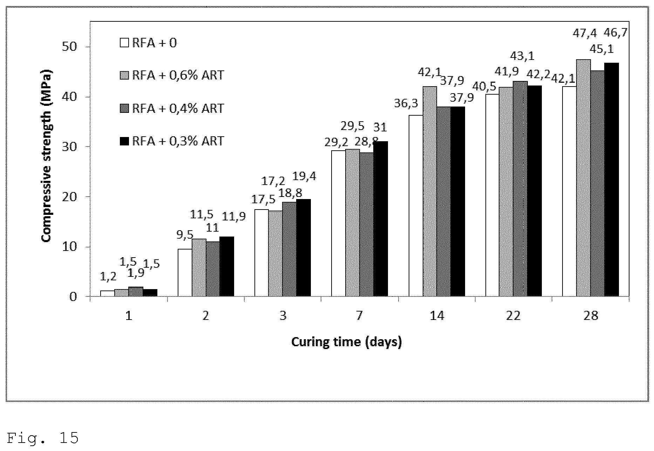

Fig. 15 is a graph illustrating the impact of the carbon nanotube concentration of the dispersion according to the present disclosure on the gain in compressions strength of construction materials containing fly ash and concrete over a curing time of 28 days. A reference sample not containing carbon nanotubes (white bars) is compared with compositions to which a stabilized aqueous dispersion of multi-walled carbon nanotubes in different concentrations was added (gray and black bars). The composition of the samples is given in Table 3. The compressive strength test results are also shown in Table 4.

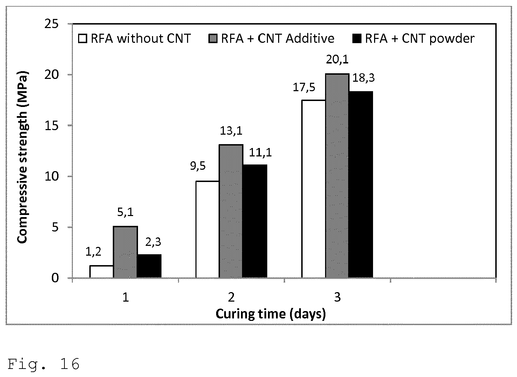

Fig. 16 is a graph illustrating the gain in compression strength of (i) a construction material containing fly ash and concrete and not containing stabilized aqueous dispersion of carbon nanotubes (white bars), (ii) a construction material containing fly ash and concrete to which a dispersion of carbon nanotubes according to the present disclosure was added (gray bars)and (iii) a construction material containing fly ash and concrete to which carbon nanotubes were added in form of a powder(black bars) over a curing time of 3 days. The composition of the tested samples is given in Tables 5-7.

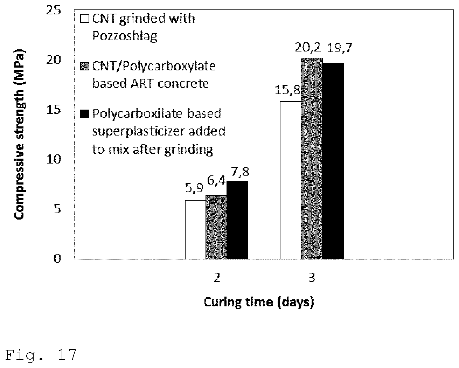

Fig. 17 is a graph illustrating the impact of the treatment of the carbon nanotubes before their addition to the construction material on the gain in compressions strength of the construction material in the first 3 days of drying. The composition of the tested samples is given in Tables 8-10.

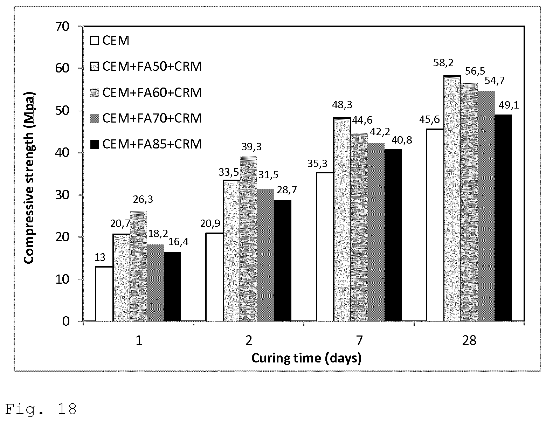

Fig. 18 is a graph illustrating the impact of the fly ash proportion on the compressive strength and curing time of a construction material composition comprising cement(CEM), fly ash (FAX wherein X is the fly ash proportion in percent by mass in terms of the mass of the cement) and 2.4 liter of a polycarboxylate containing stabilized aqueous dispersion of multi-walled carbon nanotubes(CRM) per 1 $m^3$ corresponding to a carbon nanotube proportion of 0.0004% by mass of the construction material. For comparison, a construction material not containing fly ash and carbon nanotubes is also displayed. The dispersion contains 3.8 g carbon nanotubes which were treated with toluene sulfonate in a hydrodynamic cavitation facility with additional electrostatic treatment.

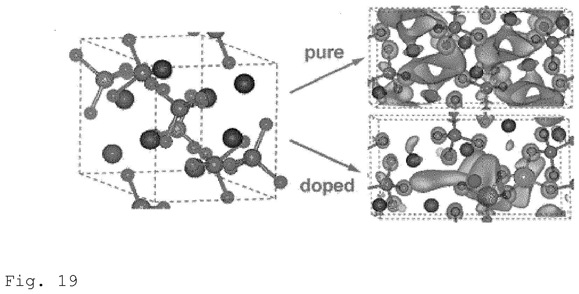

Fig. 19 is a graph illustrating the charge localization in pure $CaSiO_2$ (top right) and multi-walled carbon nanotube containing $CaSiO_2$ (bottom right) wherein carbon nanotubes where introduced in form of a dispersion.

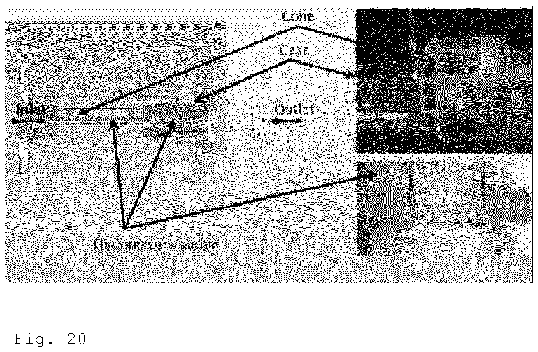

Fig. 20 is a scheme of cavitation-based dispersion unit which is a hydrodynamic cavitation facility for use according to the present application.

## DETAILED DESCRIPTION OF THE INVENTION

### Construction material composition

As mentioned above, a first aspect of the present invention relates to a construction material composition, comprising at least one binder as further specified in claim 1, at least one filler, carbon nanotubes, and optional further ingredients, wherein the proportion of the carbon nanotubes is further specified, namely, it is 0.1 ppm to 150 ppm by mass, preferably 0.2 to 100 ppm by mass, more preferably 0.3 to 50 ppm by mass, in terms of the mass of the dry construction material composition. According to a most preferred embodiment, the proportion of the CNT's is 0.1 to 0.5 ppm, in terms of the mass of the dry construction material composition.

A "dry construction material composition" is defined herein as a composition comprising all of the ingredients of the construction material composition according to the first aspect of the invention, except water.

The terms "ART concrete", "ART CNT" or "ART Additive" as used herein refer to an additive for a construction material composition, the additive containing carbon nanotubes pretreated according to the present disclosure.

Specifically, the carbon nanotubes in the ART concrete mixtures were added either in form of a stabilized aqueous carbon nanotube dispersion according to the disclosure, or as a dry grinded mixture of the carbon nanotubes and the binder.

### Carbon nanotubes

The carbon nanotubes, hereafter also denoted as CNT, are preferably multi-walled carbon nanotubes with 10 to 20 walls and a diameter in the range of 10 to 40 nm. The length of the carbon nanotubes is preferably more than 2 $\mu$m. The percentage of single-walled and double-walled carbon nanotubes is more preferably less than 1% by weight.

The carbon nanotubes can be treated in a hydrodynamic cavitation facility such illustrated in Fig. 20. For this, the carbon nanotubes can be added to the hydrodynamic cavitation facility together with a water mixture. Hydrodynamic cavitation describes the process of vaporization, bubble generation and bubble implosion in a flowing liquid as a result of a decrease and subsequent increase in local pressure. Hydrodynamic cavitation can be produced by passing a liquid through a constricted channel at a specific flow velocity or by mechanical rotation of an object through a liquid. In the present case, a hydrodynamic cavitation facility with a rapid moving plunger is used (see Figure 20). The carbon nanotubes are added to the hydrodynamic cavitation facility together with a water mixture. The process of bubble generation and the subsequent growth and collapse of the cavitation bubbles, results in very high energy densities. As a result of treatment in a hydrodynamic cavitation facility, carbon nanotubes with a shorter and more uniform length can be obtained.

If the proportion of the carbon nanotubes is 0.1 ppm by mass or less in terms of the mass of the dry construction material composition, the effect on compressive strength is low. If the proportion of the carbon nanotubes is 200 ppm by mass or more in terms of the mass of the dry construction material composition, the carbon nanotubes are present in excess, resulting in a reduced compressive strength relative to the optimum carbon nanotube concentration.

The proportion of the carbon nanotubes is preferably in the range of 0.2 to 100 ppm, and more preferably in the range of 0.3 to 50 ppm by mass in terms of the mass of the dry construction material composition. If the proportion of the carbon nanotubes is in the range of 0.2 to 50 ppm by mass in terms of the mass of the dry construction material composition, the effect on compressive strength is maximized. According to a particularly preferred embodiment, the proportion of the carbon nanotubes is in the range of 0.1 to 1 ppm, especially 0.1 to 0.5 ppm in terms of the mass of the dry construction material composition.

Figure 8 shows the compressive strength of a construction material composition, namely a brick composition, as a function of the content of multi-walled carbon nanotubes. An increase in compressive strength relative to the brick composition which does not contain carbon nanotubes is observed for carbon nanotube proportions of from 0.1 to 1 g carbon nanotubes per ton of the dry construction material (0.1 to 1 ppm by mass). In the range of 0.1 to 0.5 g carbon nanotubes per ton of the dry construction material (0.1 to 0.5 ppm by mass), a relative increase of compressive strength of more that 30% compared to carbon nanotube free composition is observed.

If the proportion of the carbon nanotubes is 0.1 ppm by mass or less in terms of the mass of the construction material composition including water, the effect on compressive strength is low. If the proportion of the carbon nanotubes is 100 ppm by mass or more in terms of the mass of the construction material composition including water, the carbon nanotubes are present in excess, resulting in a reduced compressive strength relative to the optimum carbon nanotube concentration.

The proportion of the carbon nanotubes is preferably in the range of 0.2 to 90 ppm, and more preferably in the range of 0.3 to 40 ppm by mass in terms of the mass of the construction material composition including water. If the proportion of the carbon nanotubes is in the range of 0.3 to 40 ppm by mass in terms of the mass of the construction material composition including water, the effect on compressive strength is maximized.

The proportion of the carbon nanotubes in the composition is 1 ppm to 50 ppm, preferably 3 ppm to 30 ppm and more preferably 5 ppm to 20 ppm by mass relative to the mass of the at least one binder.

The addition of carbon nanotubes in a proportion falling within the scope of the present invention results in a significant shortening of the setting time and an increased compressive strength of the hydraulic mineral binder (see Figures 4-7 and 14).

Binders

The at least one binder for use in the present invention, which is cement and fly ash with the proportion of fly ash as specified in claim 1, holds or draws the other ingredients of the construction material composition together. Binders can be classified as organic binders and mineral binders. Mineral binders are oftentimes also referred to as inorganic binders. Examples of organic binders are bitumen and polymers, and examples of mineral binders are lime, cement and gypsum. Binders are usually present in the form of powders, in particular fine powders.

Mineral binders can be further classified as hydraulic binders, non-hydraulic binders and thermoplastic binders.

As hydraulic binders, which require water to harden and develop strength, cement, hydraulic and semi-hydraulic limes obtained from burning limestone, and pozzolans can be mentioned. When mixed with non-hydraulic lime, pozzolans form a hydraulic cement. Preferably, portland cement is used in the present invention.

Cement is a hydraulic binder which requires water to harden and develop strength. Cement is usually available in the form of a powder, in particular a fine powder. Cement is made by heating limestone (calcium carbonate) with other materials (such as clay) to 1450 °C in a kiln, in a process known as calcination. During calcination, a molecule of carbon dioxide is liberated from the calcium carbonate to form calcium oxide, or quicklime, which is then blended with the other materials that have been included in the mix to form calcium silicates and other cementitious compounds such as calcium aluminate and calcium aluminate ferrite. The resulting hard substance is called clinker and mainly consists of calcium silicates, calcium aluminates and calcium ferrites.

Pozzolans are silicate-based materials that react with the calcium hydroxide generated by hydrating cement to form additional cementitious materials. In the present disclosure, pozzolans from slag or heavy fly ash are denoted as "pozzoslag".

Fly ash is a coal combustion product composed of the fine particles, i.e. particles typically having a particle size in the range of 1 $\mu$m to 1 mm, that are driven out of the boiler with the flue gases. A definition of "fly ash" is also provided in DIN EN 450 as cited above. Ash that falls in the bottom of the boiler is called bottom ash. In the present invention, bottom ash can be used as a filler. In modern coal-fired power plants, fly ash is generally captured by electrostatic precipitators or other particle filtration equipment before the flue gases reach the chimneys. Depending upon the source and makeup of the coal being burned, the components of fly ash vary considerably, but all fly ash includes substantial amounts of $SiO_2$, $Al_2O_3$ and CaO. Fly ash is usually present in form of powder, in particular fine powder, i.e. powder having a typical particle size in the range of 1 $\mu$m to 1 mm.

As non-hydraulic binders, which can only harden in the presence of air, clay, gypsum, high calcium or magnesium lime can be mentioned. Lime hardening occurs by reaction with carbon dioxide from the air (carbonation), by which it again becomes calcium carbonate (limestone). Limes can be used as the only cement binder, but are preferably used in combination with clay or a pozzolans to form a hydraulic cement.

Gypsum is a non-hydraulic binder which occurs naturally as a soft crystalline rock or sand. The chemical name is calcium sulfate dihydrate ($CaSO_4 \cdot 2H_2O$). By heating to 120-130 °C, calcium sulfate hemihydrate ($CaSO_4 \cdot 1/2H_2O$) is produced, which when mixed with water has a short setting time. Further heating of gypsum to 190 °C results in the formation of anhydrite gypsum ($CaSO_4$), which when mixed with water, sets very slowly. The term gypsum within the meaning of the present invention refers to the calcium sulfate dihydrate, hemihydrate and the corresponding anhydrite.

A thermoplastic mineral binder used in construction materials is sulfur. Thermoplastic binders, which harden on cooling and become soft when heated again. Thermoplastic materials require heat in order to be processed, and harden on cooling.

According to the present invention, cement and fly ash combinations are used as mineral binders. Portland cement, which is a hydraulic binder, is the preferred binder. In the present invention, the binder is a mixture of cement and fly ash and contains fly ash in a proportion of 30 to 85% by mass, preferably 30 to 60% by mass and more preferably 30 to 50% by mass in terms of the mass of the cement.

The composition according to the present invention contains fly ash in a proportion of 30 to 85% by mass in terms of the mass of the cement. If the proportion of the fly ash is in the range of 30 to 85% by mass in terms of the mass of the cement, higher compression strength and shorter consolidation time is observed in comparison to a cement-based construction material composition that does not contain fly ash. If the proportion of the fly ash is 60% by mass or less in terms of the mass of the cement, a minimum consolidation time is observed. If the proportion of the fly ash is 50% by mass or less in terms of the mass of the cement, a maximum in compressive strength after 28 days is obtained (see Figure 18) .

Fillers and further ingredients

As understood herein, fillers are particles added to the construction material composition, to lower the consumption of the more expensive binder material. Fillers are usually used in order to increase the volume, the weight or modify the mechanical properties of a material. Suitable fillers for use in the present invention are sand, gravel or crushed stone, and bottom ash.

As optional further ingredients, organo-functional compounds, surcharge aggregates, fly ash additives such as caustic soda, may be used in the present invention.

Superplasticizers

The construction material composition according to the present invention may optionally comprise one or more superplasticizers.

Superplasticizers, also known as high range water reducers, are chemical admixtures used where well-dispersed particle suspension is required. These polymers are used as dispersants to avoid particle segregation (gravel, coarse and fine sands), and to improve the flow characteristics (rheology) of suspensions such as in concrete applications. Their addition to concrete or mortar allows the reduction of the water to cement ratio, not affecting the workability of the mixture, and enables the production of self-consolidating concrete and high performance concrete.

Superplasticizers are water-reducing agents. As the superplasticizer, surfactants (also referred to as surface-active agents) are used. The classes of surfactants that may be useful in the present invention are ionic, cationic, amphoteric and non-ionic surfactants. Specific examples of superplasticizers for use in the present invention are phosphonates and alkylamidethoxylates may be used. More preferably, the surfactant contains at least one group of a polyhydroxyl, hydroxyl carboxylic acid, gluconic acid, citric acid, sorbitol, glycerol and/or salts thereof. In another preferred embodiment the tenside may be a copolymer. For example, an acrylic acid based polymer or an alkylpolyethoxy carboxylates copolymer may be used. In the present invention, the superplasticizer is most preferably a polycarboxylate.

Recently, very high range water reducing agents are also denoted as hyperplasticizers. Hence, hyperplasticizers may be considered as high performance superplasticizers. The term superplasticizer within the meaning of the present invention also includes hyperplasticizers. Ether polycarboxylates are typical hyperplasticizers, i.e. superplasticizers as understood herein. The hyperplasticizer, i.e. superplasticizer for use in the present invention is preferably xylene sulfonate.

Summarizing the above, the superplasticizer for use in the present invention is preferably selected from the group consisting of polycarboxylate and xylene sulfonate.

The proportion of the carbon nanotubes in the composition is in the range of 0.05 to 0.15% by mass, preferably 0.09 to 0.11% by mass, in terms of the superplasticizer.

If the carbon nanotube dispersion which is added to the composition, in particular the construction material composition, contains a superplasticizer as understood in the present invention, a more efficient restructuring of the microstructure of the binders in the composition is observed during hardening, resulting in an increased compressive strength and a faster curing time, as can be seen from Figures 16 and 17.

Specific construction material compositions

The construction material composition of the present invention comprises according to a preferred embodiment, cement and fly ash as binders, with the proportion of the fly ash as recited in claim 1, carbon nanotubes in the amounts as specified in claim 1, superplasticizer, water, filler in the form of sand, gravel and crushed stone, and optionally further ingredients, wherein the superplasticizer is present in a weight ratio to the carbon nanotubes of 1000 : (0.9-1.1).

The carbon nanotubes and the superplasticizer in the above composition were added in the form of a stabilized aqueous carbon nanotube dispersion obtained by the methods (A) or (B) described below.

Preparation of stabilized aqueous carbon nanotube dispersion

The inventors have found that, while the use of dry disperse carbon nanotubes can achieve some improvement, the properties of the construction materials, especially the compressive strength thereof, can be further improved by introducing the carbon nanotubes in the form of an appropriate dispersion, in particular in the form of a stabilized aqueous carbon nanotube dispersion, which dispersion is obtainable by the methods (A) or (B) of the present disclosure. In the stabilized aqueous carbon nanotube dispersion, agglomeration and precipitation of the carbon nanotubes can be reduced or prevented entirely, thus improving stability and shelf-life. The carbon nanotube concentration in the stabilized aqueous carbon nanotube dispersion prepared according to the methods (A) or (B) is in the range of 0.05 to 20 g carbon nanotubes per liter of the dispersion and preferably 0.1 to 5 g carbon nanotubes per liter of the dispersion.

A method (A) for the preparation of a stabilized aqueous carbon nanotube dispersion, comprises the steps of

(1) Providing or preparing carbon nanotubes;
(2) Adding the carbon nanotubes to an, optionally alkaline, aqueous medium and dispersing (e.g. by agitation or stirring) to obtain an aqueous carbon nanotube dispersion; and
(3) Treatment of the aqueous carbon nanotube dispersion by exposure to a pulsed electrostatic field;
and
(4) Addition of a superplasticizer to the aqueous carbon nanotube dispersion after step (3).

A method (B) for the preparation of a stabilized aqueous carbon nanotube dispersion, comprises the steps of

(i) Providing or preparing carbon nanotubes;
(ii) Blending the carbon nanotubes with superplasticizer to obtain a mixture;
(iii) Adding the mixture to an aqueous dispersion medium and dispersing (e.g. by agitation or stirring) to obtain an aqueous superplasticizer-containing carbon nanotube dispersion; and
(iv) Treatment of the aqueous superplasticizer-containing carbon nanotube dispersion by exposure to a pulsed electrostatic field.

The step of providing and preparing carbon nanotubes may comprise a treatment of the carbon nanotubes in a hydrodynamic cavitation facility (see Figure 20).

The blending of the carbon nanotubes with the superplasticizer may include mechanical mixing by grinding or milling of the mixture. Mechanical mixing by milling is preferable. Grinding can be performed in form of dry grinding, semi-dry grinding or wet grinding. Milling can for example be performed using a ball mill or a bead mill.

In the stabilized aqueous nanotube dispersion according to the present disclosure, the proportion of the carbon nanotubes in the mixture is in the range of 0.05 to 0.15% by mass, preferably 0.09 to 0.11% by mass, in terms of the mass of the superplasticizer. The superplasticizer is preferably a xylene sulfonate and/or a polycarboxylate, and most preferably a polycarboxylate.

The carbon nanotubes can be treated prior to the introduction of superplasticizer with 5 to 60% by mass of alkaline aqueous medium, preferably 5 to 40 % by mass of an aqueous alkali solution and more preferably in 10-15% by mass of an aqueous alkali hydroxide solution, especially sodium hydroxide aqueous solution (NaOH solution). In the following, the treatment of the carbon nanotubes in an alkaline aqueous medium is also denoted as alkali treatment. Alternatively, equivalent solutions of organic bases can be used instead of alkali solutions. We have found that, especially sodium hydroxide aqueous solution (NaOH solution) stabilizes the carbon nanotubes dispersion. The alkali treatment includes the introduction of carbon nanotubes into the aqueous alkali solution. This treatment makes it possible to achieve a high quality carbon nanotubes dispersion to be used in preparation of additive and has the critical importance for high-quality distribution of nanotubes in concrete.

The aqueous carbon nanotube dispersion can be further treated by exposure to an electrostatic field, also denoted as electrostatic treatment. The application of a pulsed electrostatic field with an intensity from 5 to 2500 V/cm and a pulse duration in the range of 10 $\mu$s to 500 ms stabilizes the carbon nanotube dispersion. The method is applicable on carbon nanotubes and preferably on the dispersion solution of carbon nanotubes and/or carbon nanotubes structures, causing additional even higher stabilization of carbon nanotubes dispersion and thereby substantially higher degree of dispersion of carbon nanotubes. Thus, a high-quality distribution of nanotubes in concrete can be obtained.

The pulse duration of the applied pulsed electrostatic field is preferably in the range of 0.010 to 500 ms, more preferably in the range of 0.020 to 100 ms, and most preferably in the range of 0.050 to 0.20 ms. The strength of the electrostatic field is adjusted in the range of 0.1 to 300,000 V/cm, preferably in the range of 1 to 12,000 V/cm, and more preferably in the range of 50 to 1,300 V/cm.

The electrostatic field treatment and the alkali solution treatment can be performed separately or in combination. In order to obtain a highly stable dispersion, a combination of both treatments is a preferable embodiment of the present disclosure.

It was found that such pulsed electrostatic field treatment as well as separate alkali solution treatment, and preferably a combination of both treatments, influences the electronic structure of multi-walled carbon nanotubes, especially non-closed $sp^2$, $sp^3$ carbon bonds as well as the topographic walls structure of multi-walled carbon nanotubes as described in section prior art. The open $sp^2$ and $sp^3$ electronic bonds at the ends of the carbon nanotubes turn into the closed type.

The dispersion can be further improved through implementation of an ultrasonication process using an ultrasonic dispergator. Ultrasonication was performed with ultrasound power in the range of 200 to 5000 W. The duration of the ultrasound application is from 1 to 10 minutes.

Ultrasonication can be combined with alkali treatment, electrostatic treatment or both. Ultrasonication is performed after alkali treatment and electrostatic treatment, and it is preferably the final step of the method for the preparation of a stabilized aqueous carbon nanotube dispersion according to the second and third aspect of the present disclosure, preferably prior to using the dispersion, e.g. by adding to the, preferably dry, construction material. The combination of alkali treatment and electrostatic treatment is a preferred embodiment of the present disclosure. The combination of alkali treatment, electrostatic treatment and ultrasonication is a more preferred embodiment of the present disclosure. Ultrasonication can also be used to disperse the dry mixture of CNT and the superplasticizer in an aqueous medium.

The dry mixture of CNT and the superplasticizer was prepared as follows. Carbon nanotubes and the superplasticizer are mixed. The proportion of the carbon nanotubes in the mixture is in the range of 0.05 to 0.15% by mass, preferably 0.09 to 0.11% by mass, in terms of the superplasticizer. The mixture has been thoroughly ground first in a ball mill (1 - 4 hours), and then mechanically mixed in a bead mill (10 - 30 mins).

Preparation of a construction material composition

The mixture of cement, fly ash and multi-walled carbon nanotubes, as we have found, allows much more facile reaction to combine lime stone with silicon dioxide to produce different types of calcium silicates and their hydrates, as well as calcium aluminate hydrates, that allow to reduce the amount of cement to be used in building material compositions and compositions, among others hydraulically hardened compositions for the production of concrete, mortar, screed or plaster and to replace this amount of cement through using combination of fly ash and multi-walled carbon nanotubes dispersion according this innovation (see Fig. 19).

EXAMPLES

Examples concerning the construction material composition

The construction material composition has been prepared as follows. Pre calculated amounts of cement and fly ash or just cement have been mixed with gravel and sand by using a mixer. Thereafter, the carbon nanotubes dispersion has been added. The mixture has been further mixed for 7 to 15 minutes.

Table 1 describes the composition of a conventional construction material composition denoted as "Mixture free of CNT" and a construction material composition according to the present disclosure (not within the claimed invention) denoted as "Mixture with CNT" wherein ART Carbon Nanotubes were added in powder form.

Table 1

| Components, kg in m³ of concrete and in weight % of concrete in brackets | Mixture free of CNT | Mixture with CNT |
|---|---|---|
| Cement | 290 (12,2%) | 290 (12,2%) |
| Gravel | 960 (40,5%) | 960 (40,5%) |
| Sand | 900 (38%) | 900 (38%) |
| Water | 170 (7,2%) | 170 (7,2%) |
| Fly ash | 50 (2,1%) | 50 (2,1%) |
| ART CNT (powder) (our carbon nanotubes) | - | 0,001 (0,00004%) |

Table 2 describes the implementation of nanostructured multi-walled carbon nanotubes in concrete with and without addition of fly ash (made in Germany). Examples of construction material compositions containing CNT according to the present disclosure (not within the claimed invention) are denoted as CEM + CRM, CEM + CRM2 and CEM + FA + CRM. For reference, conventional construction material compositions denoted as CEM and CEM + FA are also given in Table 2. The tested compositions have the following ingredients:

| | |
|---|---|
| CEM - | Cement only; |
| CEM + CRM - | Cement and multi-walled carbon nanotubes (powder) |
| CEM + CRM2 - | Cement and multi-walled carbon nanotubes (after Dispersion in Hydrodynamic Cavitation Facility) water dispersion |
| CEM + FA - | Cement and Fly ash powder |
| CEM +FA + CRM - | Cement, Fly ash and multi-walled carbon nanotubes |

Table 2

| Components, kg in m³ of concrete and in weight % of concrete in brackets | CEM | CEM + CRM | CEM + CRM2 | CEM + FA | CEM + FA + CRM |
|---|---|---|---|---|---|
| Cement 42,5 N | 330 (26,9%) | 330 (28,3%) | 330 (27,6%) | 300 (24%) | 300 (24,6%) |
| Fly ash (accordance DIN EN 450) | -- | -- | -- | 80 (6,4%) | 80 (6,6%) |
| Water | 196,5 (16%) | 125,2 (10,7%) | 153,3 (12,8%) | 196,7 (15,7%) | 153,9 (12,6%) |
| Art Nano Carbon Dispersion calculated as 0.6 weight % to cement. Each liter dispersion contain 5,85 g CNT. | -- | 1,98 (0,001%) | 1,98 (0,001%) | -- | 1,8 (0,0009%) |
| Sand 0/2 | 279,4 (22,8%) | 283,4 (24,3%) | 283,4 (23,7%) | 269, 4 (21,5%) | 273,4 (22,4%) |
| Gravel 2/8 | 139,7 (11,4%) | 141,7 (12,2%) | 141,7 (11,9%) | 134,7 (10,8%) | 136,7 (11,2%) |
| Gravel 8/16 | 279,4 (22,8%) | 283,4 (24,3%) | 283,4 (23,7%) | 269, 4 (21,6%) | 273,4 (22,4%) |

Examples concerning the preparation of the stabilized aqueous carbon nanotube dispersion

(I) A mixture of carbon nanotubes and a superplasticizer with a proportion of the carbon nanotubes in the range of 0.09 to 0.11% by mass in terms of the superplasticizer has been thoroughly ground first in a ball mill (1-4 hours), and then mechanically mixed in a bead mill (10-30 mins). Next, water was added and the mixture has been dispersed by ultrasonication using an ultrasonic dispergator manufactured by Hielscher. Ultrasonication has been made with ultrasound power from 200 W up to 5000 W and duration of ultrasound application from 1 to 10 minutes.

(II) The alkali treatment includes the introduction of carbon nanotubes into the 10-15% aqueous alkali solution.

(III) For electrostatic treatment, pulsed electrostatic fields with an intensity in the range of 5 to 2500 V/cm and a pulse duration in the range of 0,010 to 500 ms is applied. The pulsed electrostatic field applicator consist of a capacitor bank, a high voltage power supply and a discharge circuit. The dispersion to be electrostatically treated is placed between discharge circuit electrodes.

(IV) For the combined electrostatic field and alkali solution treatment, the container with CNT in an alkali solution is placed between the discharge electrodes of the discharge circuit. In order to obtain a highly stable dispersion, a combination of both treatments is preferable.

Further experimental results and effects of the present invention

Other results are presented on Figures 4-19 and Tables 1-10.

The increase in the rate of curing of the concrete can be described as a synergistic effect of using carbon nanotubes dispersed with the superplasticizer.

The application of such additives in the concrete changes the speed of the hydration of the cement during the first stage of curing and the inner structure of concrete in the following stages.

This effect is observed only in the case of pre-mixing the super plasticizer with carbon nanotubes and only during the introduction of such a composition in the cement mixture or in the hydrazine liquid mixture. In case of simultaneous mixing additives, fly ash, cement and water, this effect is not observed. This happens due to the effect of uncontrolled depositions of carbon nanotubes and superplasticizer on the surfaces of the cement stone and concrete aggregates, and subsequently disordering the chemical reactions that forming the cement stone structure.

As can be seen from Figures 4-7 and 14-15, the addition of carbon nanotubes in a proportion falling within the scope of the present invention results in a significant shortening of the setting time and an increased compressive strength of the hydraulic mineral binder.

The compositions of the samples displayed in Figure 15 are given in Table 3. The first sample denoted as Mixture free ART CONCRETE is for comparison only and outside the scope of the claimed invention. The compositions are concrete mixtures comprising fly ash and different amounts of CNT water dispersion with polycarboxylate based superplasticizer additives (Dispersion in Hydrodynamic Cavitation Facility). The samples (not within the claimed invention) were prepared as described in the section Examples.

Table 3

| Components, kg in m$^3$ of concrete and in weight % of concrete in brackets | Mixture free ART CONCRETE | Mixture with ART CONCRETE additive (0.6%) | Mixture with ART CONCRETE additive (0.4%) | Mixture with ART CONCRETE additive (0.3%) |
|---|---|---|---|---|
| Cement | 290 (12,2%) | 290 (12,2%) | 290 (12,2%) | 290 (12,2%) |
| Gravel | 960 (40,5%) | 960 (40,5%) | 960 (40,5%) | 960 (40,5%) |
| Sand | 900 (38%) | 900 (38%) | 900 (38%) | 900 (38%) |
| Water | 170 (7,2%) | 170 (7,2%) | 170 (7,2%) | 170 (7,2%) |
| RFA Fly Ash | 50 (2,1%) | 50 (2,1%) | 50 (2,1%) | 50 (2,1%) |
| ART Concrete. Each liter dispersion contain 5,85 g CNT. | - | 1,74 (0,0004%) | 1,16 (0,0003%) | 0,87 (0,0002%) |

The compression strength of the samples of Table 3 during the first 28 days of curing as displayed in Figure 15 are also given in Table 4. The ART CONCRETE examples are concrete composition with 50 kg Fly Ash (RFA) per 1 ton of concrete and different proportions of CNT added in form of water dispersion with polycarboxylate superplasticizer additives (Dispersion in Hydrodynamic Cavitation Facility) Samples were prepared as described in the section Examples.

The corresponding compositions are described in detail in Table 3.

Table 4

| No. | Mixture | Curing period, days | | | | | | |
|---|---|---|---|---|---|---|---|---|
| | | 1 | 2 | 3 | 7 | 14 | 22 | 28 |
| 1 | RFA-50+0% | 1,2 | 9,5 | 17,5 | 29,2 | 36,3 | 40,5 | 42,1 |
| 2 | RFA-50 + 0,6% ART | 1,5 | 11,5 | 17,2 | 29,5 | 42,1 | 41,9 | 47,4 |
| 3 | RFA-50 + 0,4% ART | 1,9 | 11,0 | 18,8 | 28,8 | 37,9 | 43,1 | 45,1 |
| 4 | RFA-50 + 0,3 % ART | 1,5 | 11,9 | 19,4 | 31,0 | 37,9 | 42,2 | 46,7 |

Figure 8 shows the compressive strength of a brick composition as a function of the content of multi-walled carbon nanotubes. In the range of 0.1 to 0.3 g carbon nanotubes per ton of the dry construction material, an increase of the compressive strength with increasing concentration of carbon nanotubes is observed. Surprisingly, a further increase of the carbon nanotube content results in a decrease of the compressive strength.

The compositions of the samples in Figure 16 are given in Tables 5-7. Table 5 discloses a concrete composition containing fly ash without CNT additive. Samples were prepared as described in the section Examples.

Table 5

| Concrete Composition , kg/m$^3$ concrete and in weight % of concrete in brackets | |
|---|---|
| Cement 42.5N | 290 (12,2%) |
| Raw Fly Ash | 50 (2,1%) |
| Gravel | 960 (40,5%) |
| Sand | 900 (38%) |
| Water No CNT | 170 (7,2%) |

Table 6 describes a corresponding concrete composition that differs from the composition in Table 5 in that a CNT suspension was added.

Table 6

| Concrete Composition , kg/m$^3$ and in weight % of concrete in brackets | |
|---|---|
| Cement 42.5N | 290 (12,2%) |
| Raw Fly Ash | 50 (2,1%) |
| Gravel | 960 (40,5%) |
| Sand | 900 (38%) |
| Water | 170 (7,2%) |
| Water CNT Suspension with 4.8 grams CNT /liter | 3,4 (0,0007%) |

The concrete composition in Table 7 contains a polycarboxylate containing stabilized aqueous dispersion of CNT diluted 2,5 times with water (Dispersion in Hydrodynamic Cavitation Facility).

Table 7

| Concrete Composition, kg/m$^3$ and in weight % of concrete in brackets | |
|---|---|
| Cement 42.5N | 290 (12,2%) |
| Raw Fly Ash | 50 (2,1%) |
| Gravel | 960 (40,5%) |

(continued)

| Concrete Composition, kg/m³ and in weight % of concrete in brackets | |
|---|---|
| Sand | 900 (38%) |
| Water | 170 (7,2%) |
| Liquid Additive Art Concrete-K diluted 2.5 times with water with final total CNT content 0.3g / liter (stabilized aqueous dispersion) | 1,36 (0,00002%) |

The compositions of the samples in Figure 17 are given in Tables 8-10. Tables 8-10 describe different ways to introduce CNT in fly ash ("PozzoSlag"). The fly ash exhibits a reduced content of carbon through ozone treatment and thermal reduction. Table 8 discloses a concrete composition wherein the CNTs were grinded with the fly ash prior to the addition of the fly ash to the composition.

Table 8

| Concrete Composition, kg/m³ and in weight % of concrete in brackets | | |
|---|---|---|
| Cement 42.5N | 200 | (8,4%) |
| "PozzoSlag" | 140 | (6%) |
| Gravel | 960 | (40,5%) |
| Sand | 900 | (38%) |
| Water | 170 | (7,2%) |
| CNT (grinded with "PozzoSlag") | 10g/tone of "Pozzo Slag" (0,00006%) | |

The concrete composition according to Table 9 contains a CNT/ polycarboxylate based stabilized aqueous dispersion of CNT(4,8 g CNT/L) .

Table 9

| Concrete Composition, kg/m³ and in weight % of concrete in brackets | | |
|---|---|---|
| Cement 42.5N | 200 | (8,4%) |
| "PozzoSlag" | 140 | (6%) |
| Gravel | 960 | (40,5%) |
| Sand | 900 | (38%) |
| Water | 168 | (7,1%) |
| CNT/Polycarboxilate based "ART Concrete" additive (4,8 g CNT/liter) (stabilized aqueous dispersion of CNT) | 2,04 (0,0004%) | |

The concrete composition according to Table 10 contains a polycarboxylate based superplasticizer which was added to the mixture containing CNT that was grinded with fly ash (10g CNT per ton of "PozzoSlag").

Table 10

| Concrete Composition, kg/m³ and in weight % of concrete in brackets | | |
|---|---|---|
| Cement 42.5N | 290 | (11,9%) |
| "PozzoSlag" | 140 | (5,7%) |
| Gravel | 960 | (39%) |
| Sand | 900 | (36,6%) |
| Water | 168 | (6,8%) |

(continued)

| Concrete Composition, kg/m$^3$ and in weight % of concrete in brackets | | |
|---|---|---|
| Polycarboxilate based superplasticizer added to CNT/PozzoSlag mix after grinding (10g CNT/tone "PozzoSlag") | 2,04 | (0,0001%) |

The compositions of the samples in Figure 17 are given in Tables 8-10. As can be seen from Figures 16 and 17, a significantly higher compression strength after three days is observed in a construction material wherein the carbon nanotubes have been added in form of stabilized aqueous dispersion compared to a construction material wherein the dry carbon nanotubes were simply pre-grinded with the binder.

A stabilized aqueous dispersion of carbon nanotubes containing polycarboxylate containing 4,8 g CNT/liter and shows the best results after 3 days drying time. Thus, if a carbon nanotube dispersion containing a superplasticizer or hyperplasticizer is added to the composition, a more efficient restructuring of the microstructure of the binders in the composition is observed during hardening, resulting in an increased compressive strength and a faster curing time (see Figure 19). Addition of the superplasticizer to a construction material containing CNT which were pre-grinded with fly ash results in a lower compressive strength compared to a construction material where the CNTs were dispersed with the superplasticizer prior to the addition to the binders.

Figure 18 shows the improved compressive strength of cement based construction materials that contain fly ash and carbon nanotubes compared to the corresponding construction material that does not contain fly ash and carbon nanotubes. If the proportion of the fly ash is in the range of 30 to 85% by mass in terms of the mass of the cement, a higher compressions strength and a shorter consolidation time is observed in comparison to a cement based construction material composition that does not contain fly ash. If the proportion of the fly ash is 60% by mass or less in terms of the mass of the cement, a minimum consolidation time is observed. If the proportion of the fly ash is 50% by mass or less in terms of the mass of the cement, a maximum in compressions strength after 28 days is obtained. Thus, the compressive strength of the construction material can be increased and the curing time can be decreased by the addition of fly ash in combination with an stabilized aqueous dispersion of carbon nanotubes to the composition.

Furthermore, the proportion of the fly ash in the construction material relative to cement can be increased.

Examples of materials, which have been used in the production of constructional material compositions:

    1. Carbon nanotubes (CNT)
    2. Water
    3. Sand
    4. Fly Ash - from coal powered power stations
    5. Superplasticizer - CP-WBK-50 produced by LG Chem, (copolymer carboxylat acid)
    6. Cement
    7. Aggregate and gravel from dense rocks for construction work

INDUSTRIAL APPLICABILITY

A construction material composition exhibiting a fast curing time and a high compression strength can be efficiently produced at low cost. Therefore, the composition is preferably used for constructions and buildings which are exposed to heavy loads. The shorter hardening time of the composition according to the present invention allows a reduction of the construction time. Furthermore, the present invention enables the substitution of cheap industrial byproducts such as fly ash for expensive binders such as portland cement which also results in a shorter curing time and a higher compressive strength of the resulting composition.

**Claims**

1. A construction material composition comprising at least one binder, at least one filler, carbon nanotubes, and optional further ingredients,
   wherein the proportion of the carbon nanotubes is 0.1 ppm to 150 ppm by mass, in terms of the mass of the dry construction material composition, and
   wherein the at least one binder is cement and fly ash, with the proportion of the fly ash being 30 to 85% by mass, in terms of the mass of the cement.

2. The composition according to claim 1, wherein the proportion of the carbon nanotubes is 0.2 to 100 ppm by mass, in terms of the mass of the dry construction material composition.

3. The composition according to claim 1, wherein the proportion of the carbon nanotubes is 0.3 to 50 ppm by mass, in terms of the mass of the dry construction material composition.

4. The composition according to claim 1, wherein the proportion of the carbon nanotubes is 0.1 to 0.5 ppm by mass, in terms of the mass of the dry construction material composition.

5. The composition according to any one of claims 1 to 4, which further contains a superplasticizer.

6. The composition according to claim 5, wherein the superplasticizer is a polycarboxylate.

7. The composition according to claim 5, wherein the superplasticizer is xylene sulfonate.

8. The composition according to any one of claims 5 to 7, wherein the proportion of the carbon nanotubes in the composition is in the range of 0.05 to 0.15% by mass, in terms of the superplasticizer.

9. The composition according to any one of claims 5 to 7, wherein the proportion of the carbon nanotubes in the composition is in the range of 0.09 to 0.11% by mass, in terms of the superplasticizer.

10. The composition according to any one of claims 1 to 9, wherein the proportion of the carbon nanotubes in the composition is 1 ppm to 50 ppm by mass relative to the mass of the at least one binder.

11. The composition according to any one of claims 1 to 10, further comprising water.

12. A method for preparing a composition according to any one of claims 1 to 11 comprising blending a stabilized aqueous carbon nanotube dispersion with the at least one binder, the at least one filler, the optional further ingredients, and optionally water,
wherein the stabilized aqueous carbon nanotube dispersion contains carbon nanotubes and a superplasticizer, and wherein the stabilized aqueous carbon nanotube dispersion is obtainable by the following preparation method (A) or the following preparation method (B):
Method (A) comprises the following steps:

(1) Adding the carbon nanotubes to an, optionally alkaline, aqueous medium and dispersing to obtain an aqueous carbon nanotube dispersion;
(2) Treating the aqueous carbon nanotube dispersion by exposure to a pulsed electrostatic field; and
(3) Adding the superplasticizer to the aqueous carbon nanotube dispersion after step (2);

Method (B) comprises the following steps:

(1) Blending the carbon nanotubes with the superplasticizer to obtain a mixture;
(2) Adding the mixture to an aqueous dispersion medium and dispersing to obtain an aqueous superplasticizer-containing carbon nanotube dispersion; and
(3) Treating the aqueous superplasticizer-containing carbon nanotube dispersion by exposure to a pulsed electrostatic field.

13. The method according to claim 12, wherein the superplasticizer is a polycarboxylate and/or a xylene sulfonate.

14. The method according to claim 12 or 13, wherein
the proportion of the carbon nanotubes in the stabilized aqueous carbon nanotube dispersion being in the range of 0.05 to 0.015% by mass, in terms of the mass of the superplasticizer.

**Patentansprüche**

1. Konstruktionsmaterialzusammensetzung, die mindestens ein Bindemittel, mindestens einen Füllstoff, Kohlenstoff-Nanoröhrchen und optional weitere Bestandteile enthält,

wobei der Anteil der Kohlenstoff-Nanoröhrchen 0,1 bis 150 Massen-ppm, bezogen auf die Masse der trockenen Konstruktionsmaterialzusammensetzung, ist und

wobei das mindestens eine Bindemittel Zement und Flugasche ist, wobei der Anteil der Flugasche 30 bis 85 Massen-%, bezogen auf die Masse des Zements, ist.

2. Zusammensetzung gemäß Anspruch 1, wobei der Anteil der Kohlenstoff-Nanoröhrchen 0,2 bis 100 Massen-ppm, bezogen auf die Masse der trockenen Konstruktionsmaterialzusammensetzung, ist.

3. Zusammensetzung gemäß Anspruch 1, wobei der Anteil der Kohlenstoff-Nanoröhrchen 0,3 bis 50 Massen-ppm, bezogen auf die Masse der trockenen Konstruktionsmaterialzusammensetzung, ist.

4. Zusammensetzung gemäß Anspruch 1, wobei der Anteil der Kohlenstoff-Nanoröhrchen 0,1 bis 0,5 Massen-ppm, bezogen auf die Masse der trockenen Konstruktionsmaterialzusammensetzung, ist.

5. Zusammensetzung gemäß mindestens einem der Ansprüche 1 bis 4, die ferner ein Fließmittel enthält.

6. Zusammensetzung gemäß Anspruch 5, wobei das Fließmittel ein Polycarboxylat ist.

7. Zusammensetzung gemäß Anspruch 5, wobei das Fließmittel Xylolsulfonat ist.

8. Zusammensetzung gemäß mindestens einem der Ansprüche 5 bis 7, wobei der Anteil der Kohlenstoff-Nanoröhrchen in der Zusammensetzung im Bereich von 0,05 bis 0,15 Massen-%, bezogen auf das Fließmittel, liegt.

9. Zusammensetzung gemäß mindestens einem der Ansprüche 5 bis 7, wobei der Anteil der Kohlenstoff-Nanoröhrchen in der Zusammensetzung im Bereich von 0,09 bis 0,11 Massen-%, bezogen auf das Fließmittel, liegt.

10. Zusammensetzung gemäß mindestens einem der Ansprüche 1 bis 9, wobei der Anteil der Kohlenstoff-Nanoröhrchen in der Zusammensetzung 1 bis 50 Massen-ppm, relativ zu der Masse des mindestens eines Fließmittels, ist.

11. Zusammensetzung gemäß mindestens einem der Ansprüche 1 bis 10, die ferner Wasser enthält.

12. Verfahren zur Herstellung einer Zusammensetzung gemäß mindestens einem der Ansprüche 1 bis 11, welches das Vermischen einer stabilisierten, wässrigen Kohlenstoff-Nanoröhrchen-Dispersion mit dem mindestens einen Bindemittel, dem mindestens einen Füllstoff, den optionalen weiteren Bestandteilen und optional Wasser umfasst,

wobei die stabilisierte, wässrige Kohlenstoff-Nanoröhrchen-Dispersion Kohlenstoff-Nanoröhrchen und ein Fließmittel enthält und

wobei die stabilisierte, wässrige Kohlenstoff-Nanoröhrchen-Dispersion mit dem folgenden Herstellungsverfahren (A) oder dem folgenden Herstellungsverfahren (B) erhältlich ist:

Verfahren (A) umfasst die folgenden Schritte:

(1) Zugabe der Kohlenstoff-Nanoröhrchen zu einem, optional alkalischen, wässrigen Medium und Dispergieren, um so eine wässrige Kohlenstoff-Nanoröhrchen-Dispersion zu erhalten;
(2) Behandeln der wässrigen Kohlenstoff-Nanoröhrchen-Dispersion, indem diese einem gepulsten elektrostatischen Feld ausgesetzt wird; und
(3) Zugabe des Fließmittels zu der wässrigen Kohlenstoff-Nanoröhrchen-Dispersion nach Schritt (2) ;

Verfahren (B) umfasst die folgenden Schritte:

(1) Vermischen der Kohlenstoff-Nanoröhrchen mit dem Fließmittel, um so eine Mischung zu erhalten;
(2) Zugabe der Mischung zu einem wässrigen Dispersionsmedium und Dispergieren, um eine wässrige, Fließmittel enthaltende Kohlenstoff-Nanoröhrchen-Dispersion zu erhalten; und
(3) Behandeln der wässrigen, Fließmittel enthaltenden Kohlenstoff-Nanoröhrchen-Dispersion, indem diese einem gepulsten elektrostatischen Feld ausgesetzt wird.

13. Verfahren gemäß Anspruch 12, bei dem das Fließmittel ein Polycarboxylat und/oder ein Xylolsulfonat ist.

14. Verfahren gemäß Anspruch 12 oder 13, bei dem der Anteil der Kohlenstoff-Nanoröhrchen in der stabilisierten, wässrigen Kohlenstoff-Nanoröhrchen-Dispersion im Bereich von 0,05 bis 0,015 Massen-%, bezogen auf die Masse des Fließmittels, liegt.

**Revendications**

1. Composition de matériau de construction comprenant au moins un liant, au moins une charge, des nanotubes de carbone et d'autres ingrédients facultatifs,
dans laquelle la proportion des nanotubes de carbone est de 0,1 ppm à 150 ppm en masse, en termes de la masse de la composition de matériau de construction sèche, et
dans laquelle l'au moins un liant est du ciment et des cendres volantes, avec la proportion des centres volantes étant de 30 à 85 % en masse, en termes de la masse du ciment.

2. Composition selon la revendication 1, dans laquelle la proportion des nanotubes de carbone est de 0,2 à 100 ppm en masse, en termes de la masse de la composition de matériau de construction sèche.

3. Composition selon la revendication 1, dans laquelle la proportion des nanotubes de carbone est de 0,3 à 50 ppm en masse, en termes de la masse de la composition de matériau de construction sèche.

4. Composition selon la revendication 1, dans laquelle la proportion des nanotubes de carbone est de 0,1 à 0,5 ppm en masse, en termes de la masse de la composition de matériau de construction sèche.

5. Composition selon l'une quelconque des revendications 1 à 4, qui contient en outre un superplastifiant.

6. Composition selon la revendication 5, dans laquelle le superplastifiant est un polycarboxylate.

7. Composition selon la revendication 5, dans laquelle le superplastifiant est le xylène sulfonate.

8. Composition selon l'une quelconque des revendications 5 à 7, dans laquelle la proportion des nanotubes de carbone dans la composition est dans la plage de 0,05 à 0,15 % en masse, en termes du superplastifiant.

9. Composition selon l'une quelconque des revendications 5 à 7, dans laquelle la proportion des nanotubes de carbone dans la composition est dans la plage de 0,09 à 0,11 % en masse, en termes du superplastifiant.

10. Composition selon l'une quelconque des revendications 1 à 9, dans laquelle la proportion des nanotubes de carbone dans la composition est de 1 ppm à 50 ppm en masse par rapport à la masse de l'au moins un liant.

11. Composition selon l'une quelconque des revendications 1 à 10, comprenant en outre de l'eau.

12. Procédé de préparation d'une composition selon l'une quelconque des revendications 1 à 11, comprenant l'étape consistant à mélanger une dispersion aqueuse stabilisée de nanotubes de carbone avec l'au moins un liant, l'au moins une charge, les autres ingrédients facultatifs, et facultativement de l'eau,
dans lequel la dispersion aqueuse stabilisée de nanotubes de carbone contient des nanotubes de carbone et un superplastifiant, et
dans lequel la dispersion aqueuse stabilisée de nanotubes de carbone peut être obtenue par le procédé de préparation (A) suivant ou le procédé de préparation (B) suivant :

le procédé (A) comprend les étapes suivantes consistant à :

(1) ajouter les nanotubes de carbone à un milieu aqueux, facultativement alcalin, et disperser pour obtenir une dispersion aqueuse de nanotubes de carbone ;
(2) traiter la dispersion aqueuse de nanotubes de carbone par exposition à un champ électrostatique pulsé ; et
(3) ajouter le superplastifiant à la dispersion aqueuse de nanotubes de carbone après l'étape (2) ;

le procédé (B) comprend les étapes suivantes consistant à :

(1) mélanger les nanotubes de carbone avec le superplastifiant pour obtenir un mélange ;

(2) ajouter le mélange à un milieu de dispersion aqueuse et disperser pour obtenir une dispersion aqueuse de nanotubes de carbone contenant le superplastifiant ; et
(3) traiter la dispersion aqueuse de nanotubes de carbone contenant le superplastifiant par exposition à un champ électrostatique pulsé.

13. Procédé selon la revendication 12, dans lequel le superplastifiant est un polycarboxylate et/ou un xylène sulfonate.

14. Procédé selon la revendication 12 ou 13, dans lequel la proportion des nanotubes de carbone dans la dispersion aqueuse stabilisée de nanotubes de carbone étant dans la plage de 0,05 à 0,015 % en masse, en termes de la masse du superplastifiant.

Fig.1

Fig.1

Fig.2

Interpolation Values… C:\Program Files\a22      32\fritsch\HIMNT 1.FPS

| | | |
|---|---|---|
| 0.050-1.000μm=100.00% | 1.000-2.000μm=0.00% | 2.000-3.000μm=0.00% |
| 3.000-4.000μm=0.00% | 4.000-5.000μm=0.00% | 5.000-10.000μm=0.00% |
| 10.000-20.000μm=0.00% | 20.000-50.000=0.00% | 50.000-100.000μm=0.00% |
| 100.000-200.000μm=*** | | |

Fig.3

Fig. 4

Fig. 5

Fig. 6

Fig. 7

Fig. 8

Fig. 9

Histogram of tube diameter

Fig. 10

Fig. 11

Fig. 12

Fig. 13

Fig. 14

Fig. 15

Fig. 16

Fig. 17

Fig. 18

Fig. 19

Fig. 20

## REFERENCES CITED IN THE DESCRIPTION

### Patent documents cited in the description

- FR 2998573 A1
- WO 2016148678 A1
- WO 2014137396 A
- DE 112013005713 T5
- DE 112013004933 T5
- US 5513755 A
- US 9254490 B
- US 20120280069 A
- US 20140245931 A
- JP 2002160960 A
- JP 2003055019 A
- US 20150183689 A
- DE 60302138 T2
- US 20070289503 A
- US 8440015 B
- US 3765920 A
- JP 2006327868 A
- JP 2006225221 A
- US 20080017077 A1
- JP 2006044958 A
- US 20090158969 A
- DE 102014013804 A1
- KR 20040089995 A
- EP 1614670 A2
- JP 2007001802 A
- US 20100071597 A
- US 20090229494 A
- DE 102013114824 A1
- CN 105060790 A
- CN 104591623 A
- CN 104030634 A
- CN 102603235 A
- KR 101180060 B1

### Non-patent literature cited in the description

- S. IIJIMA. *Nature,* 1991, vol. 56, 354
- L. X. ZHENG ; M. J. O'CONNELL ; S. K. DOORN ; X. Z. LIAO ; Y. H. ZHAO ; E. A. AKHADOV ; M. A. HOFFBAUER ; B. J. ROOP ; Q. X. JIA ; R. C. DYE. *Nat. Mater.,* 2004, vol. 3, 673
- P. G. COLLINS ; P. AVOURIS. *Scientific American,* 2000, vol. 62
- S. BERBER ; Y.-K. KWON ; D. TOMANEK. *Phys. Rev. Lett.,* 2000, vol. 84, 4613
- B. Q. WEI ; R. VAJTAI ; P. M. AJAYAN. *Appl. Phys. Lett.,* 2001, vol. 79, 1172
- B. KIM ; A. FUHRER. *J. Phys.: Condensed Matter,* 2004, vol. 16, 553
- Z. K. TANG ; L. ZHANG ; N. WANG ; X. X. ZHANG ; G. H. WEN ; G. D. LI ; J. N. WANG ; C. T. CHAN ; P. SHENG. *Science,* 2001, vol. 292, 2462
- I. W. CHIANG ; B. E. BRINSON ; R. E. SMALLEY ; J. L. MARGRAVE ; R. H. HAUGE. *J. Phys. Chem. B,* 2001, vol. 105, 1157
- S. BANDOW ; A. M. RAO ; K. A. WILLIAMS ; A. THESS ; R. E. SMALLEY ; P. C. EKLUND. *J. Phys. Chem. B,* 1997, vol. 101, 8839
- G. S. DUESBERG ; J. MUSTER ; V. KRSTIC ; M. BURGHARD ; S. ROTH. *Appl. Phys. A,* 1998, vol. 67, 117
- M. HOLZINGER ; A. HIRSCH ; P. BERNIER ; G. S. DUESBERG ; M. BURGHARD. *Appl. Phys. A,* 2000, vol. 70, 599
- S. NIYOGI ; H. HU ; M. A. HAMON ; P. BHOWMIK ; B. ZHAO ; S. M. ROZENZHAK ; J. CHEN ; M. E. ITKIS ; M. S. MEIER ; R. C. HADDON. *J. Am. Chem. Soc.,* 2001, vol. 123, 733
- M. S. ARNOLD ; A. A. GREEN ; J. F. HULVAT ; S. I. STUPP ; M. C. HERSAM. *Nat. Nanotechnol.,* 2006, vol. 1, 60
- C. A. DYKE ; J. M. TOUR. *Nano Lett.,* 2003, vol. 3, 1215
- V. C. MOORE ; M. S. STRANO ; E. H. HAROZ ; R. H. HAUGE ; R. E. SMALLEY ; J. SCHMIDT ; Y. TALMON. *Nano Lett.,* 2003, vol. 3, 1379
- A.ISHIBASHI ; N. NAKASHIMA. *Chem. Eur. J.,* 2006, vol. 12, 7595
- W. WENSELEERS ; I. I. VLASOV ; E. GOOVAERTS ; E. D. OBRAZTSOVA ; A. S. LOBACH ; A. BOUWEN. *Adv. Funct. Mater.,* 2004, vol. 14, 1105
- H. DODZIUK ; A. EJCHART ; W. ANCZEWSKI ; H. UEDA ; E. KRINICHNAYA ; G. DOLGONOS ; W. A.KUTNER. *Chem. Commun.,* 2003, vol. 9, 986
- S. IIJIMA ; T. ICHIHASHI. *Nature,* 1993, vol. 363, 603
- H. ZHU ; C. XU ; B. WEI ; D. WU. *Carbon,* 2002, vol. 40, 2023
- J. TERSOFF ; R. S. RUOFF. *Phys. Rev. Lett.,* 1994, vol. 73, 676

- **A. THESS ; R. LEE ; P. NIKOLAEV ; H. DAI ; P. PETIT ; J. ROBERT ; C. XU ; Y. H. LEE ; S. G. KIM et al.** *Science,* 1996, vol. 273, 483
- **M. J. O'CONNELL ; P. BOUL ; L. M. ERICSON ; C. HUFFMAN ; Y. WANG ; E. HAROZ ; C. KUPER ; J. TOUR ; K. D. AUSMAN ; R. E. SMALLEY.** *Chem. Phys. Lett.,* 2001, vol. 342, 265
- **A. JUNG.** *University of Erlangen-Nürnberg,* 2007
- **H. ALLOUCHE ; M. MONTHIOUX ; R. L. JACOB-SEN.** *Carbon,* 2003, vol. 41, 2897
- **H. ALLOUCHE ; M. MONTHIOUX.** *Carbon,* 2005, vol. 43, 1265
- **T. W. ODOM ; J.-L. HUANG ; P. KIM ; C. M. LIEBER.** *J. Phys. Chem. B,* 2000, vol. 104, 2794
- **S. BELLUCI.** *Phys. Stat. Sol. C,* 2005, vol. 2, 34
- **H. G. CHAE ; S. KUMAR.** *J. Appl. Polym. Sci.,* 2005, vol. 100, 791
- **B. G. DEMCZYK ; Y. M. WANG ; J. CUMINGS ; M. HETMAN ; W. HAN ; A. ZETTL ; R. O. RITCHIE.** *Mater. Sci. Eng., A,* 2002, vol. 334, 173
- **M. MEO ; R. M.** *Compos. Sci. Technol.,* 2006, vol. 66, 1597
- **S. B. MEO ; A. R., CRIT.** *Rev. Solid State Mater. Sci.,* 2001, vol. 26, 145
- **M.-F. YU ; O. LOURIE ; M. J. DYER ; K. MOLONI ; T. F. KELLY ; R. S. RUOFF.** *Science,* 2000, vol. 287, 637
- **J.-P. SALVETAT-DELMOTTE ; A. RUBIO.** *Carbon,* 2002, vol. 40, 1729
- **S. NIYOGI ; M. A. HAMON ; H. HU ; B. ZHAO ; P. BHOWMIK ; R. SEN ; M. E. ITKIS ; R. C. HADDON.** *Acc. Chem. Res.,* 2002, vol. 35, 1105
- **S. BANERJEE ; T. HEMRAJ-BENNY ; S. S. WONG.** *Adv. Mater.,* 2005, vol. 17, 17
- **Z. CHEN ; W. THIEL ; A. HIRSCH.** *Chem. Phys. Chem.,* 2003, vol. 4, 93
- **TOHJI et al.** *J. Phys. Chem. B,* 1997, vol. 101, 1974-1978
- **SHI et al.** *Solid State Communications,* 1999, vol. 112, 35-37
- **MIZOGUTI et al.** *Chemical Physics Letters,* 2000, vol. 321, 297-301
- **ZIMMERMAN et al.** *Chem. Mater,* 2000, vol. 12, 1361-1366
- **RINZLER et al.** *Appl. Phys.,* 1998, vol. 67, 29-37
- **DILLION et al.** *Adv. Mater,* 1999, vol. 11, 1354-1358
- **BANDOW et al.** *J. Phys. Chem.,* 1997, vol. 101, 8839-8842
- **SHELIMOV et al.** *Chemical Physics Letter,* 1998, vol. 282, 429-434
- **HARUTYUNYAN et al.** *Mat. Res. Soc. Symp. Proc.,* 2002, vol. 706
- **CHEN et al.** *J. Mater. Res.,* 1998, vol. 13 (9), 2423-2431
- **CHEN et al.** *Science,* 1998, vol. 282, 95-98
- **HOLZINGER et al.** *Angew. Chem. Int. Ed.,* 2001, vol. 40 (21), 4002-4005
- **PENG et al.** *Chem. Commun.,* 2003, 362-363
- **KINI et al.** *Rice Quantum Inst. Sixteenth Annual Summer Research Colloquium,* 09 August 2002, 25
- **BAHR et al.** *Chem. Mater.,* 2001, vol. 13, 3823-3824
- **KOOI et al.** *Angew. Chem. Int. Ed.,* 2002, vol. 41 (8), 1353-1355
- **TAGMATARCHIS et al.** *Chem. Commun.,* 2002, 2010-2011
- Coal Ash: Characteristics, Management and Environmental Issues. Electric Power Research Institute, September 2009
- **XIUPING FENG.** *Boyd Clark 2011 World of coal Ash (WOCA) Conference,* 09 December 2011
- User Guidelines for Waste and Byproduct Materials in Pavement Construction. Federal Highway Administration Research and Technology
- **GHASSAN K. AL-CHAAR ; MOUIN ALKADI ; PANAGIOTIS G. ASTERIS.** *The Open Construction and Building Technology Journal,* 2013, vol. 7, 33-42
- **WOLFRAM SCHMIDT ; DIRK WEND ; HANS-CARSTEN KÜHNE ; BIRGIT MENG.** The influence of superplasticiser modifications on early hydration processes. *Concrete plant international CPI,* 2012